# EUROPEAN PATENT SPECIFICATION

(11) **EP 4 332 134 B1**
(45) Date of publication and mention of the grant of the patent: **10.06.2026**
(21) Application number: 22795533.3
(22) Date of filing: 31.03.2022
(51) Int. Cl.: C08F 214/06, C08F 214/08, C08F 220/18, C08F 220/56, C09K 3/18, C09D 5/16, C09D 7/20, C09D 133/08, C09D 127/06, D06M 15/263, D06M 15/248, D06M 15/277, D06M 15/333, D06M 23/10, C08F 6/00

(54) **DISPERSION**
DISPERSION
DISPERSION

(30) Priority: 27.04.2021 JP 2021075207
(43) Date of publication of application: 06.03.2024
(73) Proprietor: DAIKIN INDUSTRIES, LTD., Osaka-Shi, Osaka 530-0001 (JP)
(72) Inventor: KAWABE, Rumi, Osaka-shi, Osaka 530-0001 (JP); YAMAMOTO, Ikuo, Osaka-shi, Osaka 530-0001 (JP); MIYAHARA, Masahiro, Osaka-shi, Osaka 530-0001 (JP); NAKAMURA, Keisuke, Osaka-shi, Osaka 530-0001 (JP)
(74) Representative: Hoffmann Eitle
(86) International application number: PCT/JP2022/016847
(87) International publication number: WO 2022/230617

(56) References cited:
- WO-A1-2018/110667
- WO-A1-2021/177459
- JP-A- 2000 086 704
- JP-A- 2005 105 047
- JP-A- 2011 201 981
- JP-A- 2012 503 029
- JP-A- 2019 026 747
- JP-A- 2019 026 747
- JP-A- H0 480 218
- JP-A- H0 480 218

## Description

### Technical Field

The present disclosure relates to a dispersion.

### Background Art

There is known a water- and oil-repellent agent that is less problematic in terms of change in the form and performance deterioration thereof and is thus excellent in storage stability. The water- and oil-repellent agent is provided by using a water-dispersible water- and oil-repellent agent including a copolymer obtained by copolymerizing a polyfluoroalkyl group-containing monomer, vinyl chloride or vinylidene chloride, and other copolymerizable monomers, and having a concentration of the unreacted vinyl chloride monomer or vinylidene chloride monomer of 10 ppm or less provided (JP-A-1992-80218).

JP-A-2019-026747 discloses a water repellent composition free of a fluorine-containing monomer, comprising (1) 30-100 wt.%, based on the polymer, of a monomer of the formula CH₂=C(-R²)-C(=O)-NHR¹ wherein R¹ is a C₇₋₄₀-hydrocarbon group, and R² is H or methyl, and (2) a liquid medium.

### Summary of Invention

### Technical Problem

However, when using a non-fluorine copolymer without using a polymer other than the fluorine-containing polymer as described in JP-A-1992-80218, a product stability and a water-repellency are not sufficient. An object of the present disclosure is to provide a novel dispersion that enables both product stability and water-repellency.

### Solution to Problem

The present invention provides a dispersion ("The present dispersion") comprising:
(A) a non-fluorine copolymer comprising:
   (a1) ≥ 35 wt.% of repeating units derived from a
      hydrophobic monomer (a1), the monomer (a1) being a compound of the formula:

      CH₂=C(-R¹²)-C(=O)-Y¹¹-(R¹¹)ₖ

      wherein
      - R¹¹: is a C₂₋₄₀-hydrocarbon group,
      - R¹²: is H, Cl, Br, I, -CH₃, cyano, or benzyl or phenyl each optionally substituted,
      - Y¹¹: is a di- to tetravalent group composed of at least one selected from a direct bond, a di- to tetravalent C₁-hydrocarbon group, -C₆H₄-, -O-, -C(=O)-, -S(=O)₂- and -NR'-, wherein R' is H or a C₁₋₄-hydrocarbon group, and
      - k: is 1-3; and
   (a2) ≥ 3 wt.% of repeating units derived from at least one chloride monomer (a2) selected from vinyl chloride and vinylidene chloride; and
(B) a liquid medium comprising a water-soluble organic solvent (b1) having at least two groups selected from OH and an ether group,
wherein the concentration of unreacted monomer (a2) in the dispersion is ≤ 10.0 ppm.

Also, the present invention provides a method for producing a dispersion comprising
(i) copolymerizing a hydrophobic monomer (a1) and at least one chloride monomer (a2) selected from vinyl chloride and vinylidene chloride in a polymerization solvent to obtain a polymer solution comprising a non-fluorine copolymer (A) comprising
   (a1) ≥ 35 wt.% of repeating units derived from a hydrophobic monomer (a1), the monomer (a1) being a compound of the formula:

      CH₂=C(-R¹²)-C(=O)-Y¹¹-(R¹¹)ₖ

      wherein
      - R¹¹: is a C₂₋₄₀-hydrocarbon group,
      - R¹²: is H, Cl, Br, I, -CH₃, cyano, or benzyl or phenyl each optionally substituted,
      - Y¹¹: is a di- to tetravalent group composed of at least one selected from a direct bond, a di- to tetravalent C₁-hydrocarbon group, -C₆H₄-, -O-, -C(=O)-, -S(=O)₂- and -NR'-, wherein R' is H or a C₁₋₄-hydrocarbon group, and
      - k: is 1-3; and
   (a2) ≥ 3 wt.% of repeating units derived from at least one chloride monomer (a2) selected from vinyl chloride and vinylidene chloride, and
(ii) reducing the concentration of unreacted monomer (a2) in the obtained polymer solution to ≤ 10.0 ppm,
wherein the polymerization solvent comprises a water-soluble organic solvent (b1) having at least two groups selected from OH and an ether group, or such a solvent (b1) is added to the polymer solution.
Yet further, present invention provides (i) the use of the present dispersion as a water-repellent agent, (ii) a method for producing a treated product, comprising applying the present dispersion to a substrate, and (iii) a textile product treated with the present dispersion.

Preferred embodiments of the invention are as defined in the appended dependent claims and/or in the following detailed description.

### Effects of Invention

The present dispersion has an excellent product stability and water-repellency. Moreover, treating products with the present dispersion enables improvements in, for example, feeling of use and durability of the products, such as chalk mark resistance and fastness to rubbing.

### Description of Embodiments

<Dispersion>

The present dispersion (particularly water dispersion) includes a non-fluorine copolymer (A), and a liquid medium (B). The dispersion may further include a surfactant, and/or a curing agent.
The dispersion may further include other components. The dispersion may be free of a fluorine-containing compound.

### [Non-fluorine copolymer (A)]

Non-fluorine copolymer (A) is free of fluorine atoms.

Non-fluorine copolymer (A) includes a repeating unit derived from a hydrophobic monomer (a1), and a repeating unit derived from a chloride monomer (a2).
Non-fluorine copolymer (A) may further include a crosslinkable monomer (a4). Non-fluorine copolymer (A) may also include other monomer (a5).

### (Hydrophobic monomer (a1))

Hydrophobic monomer (a1) has one ethylenically unsaturated double bond and a C₂₋₄₀-hydrocarbon group.

Hydrophobic monomer (a1) may have at least one C₂₋₄₀-hydrocarbon group. The hydrocarbon group is preferably an aliphatic hydrocarbon group, in particular a saturated aliphatic hydrocarbon group, and in particular an alkyl group. The hydrocarbon group may be linear or branched and preferably linear. The number of carbon atoms of the hydrocarbon group may be 2 or more, 3 or more, 4 or more, 6 or more, 8 or more, 10 or more, 11 or more, 12 or more, 14 or more, or 16 or more and preferably 6 or more. The number of carbon atoms of the hydrocarbon group may be 40 or less, 30 or less, 25 or less, 22 or less, or 20 or less and preferably 30 or less.

Hydrophobic monomer (a1) is a monomer of the formula:

CH₂=C(-R¹²)-C (=O)-Y¹¹-(R¹¹)ₖ

wherein
- R¹¹: is a C₂₋₄₀-hydrocarbon group,
- R¹²: is H, Cl, Br, I, -CH₃, cyano, or benzyl or phenyl, each optionally substituted,
- Y¹¹: is a di- to tetravalent group composed of at least one selected from a direct bond, a di- to tetravalent C₁-hydrocarbon group, -C₆H₄-, -O-, -C(=O)-, -S(=O)₂- and -NR'-, wherein R' is H or a C₁₋₄-hydrocarbon group, and
- k: is 1-3.

R¹¹ is preferably a branched or linear (preferably long linear chain) hydrocarbon group. The hydrocarbon group is preferably an aliphatic hydrocarbon group, particularly a saturated aliphatic hydrocarbon group, and in particular an alkyl group. The -CH₃ group has a lower surface free energy than -CH₂- and is more likely to exhibit a liquid-repellency. For this reason, a structure with many branches and many -CH₃ groups is preferred. A long chain alkyl group of a certain length, on the other hand, exhibits a high liquid-repellency derived for its crystallinity. Therefore, it can be a branched hydrocarbon group (for example, a branched alkyl group), particularly a t-butyl group or isopropyl group, a group with a multi-branched structure, or a long chain hydrocarbon group (or a long linear hydrocarbon group), for example, an alkyl group. The number of carbon atoms of R¹¹ is 2 or more, and may be 3 or more, 4 or more, 6 or more, 8 or more, 10 or more, 11 or more, 12 or more, 14 or more, 16 or more, or 18 or more and preferably 10 or more. The number of carbon atoms of R¹¹ is 40 or less, and may be 30 or less, 25 or less, 20 or less, 15 or less, or 12 or less.

k is 1, 2 or 3. k = 3 when Y¹¹ has a tetravalent hydrocarbon group having one carbon atom, for example. k = 2 when Y¹¹ has a trivalent hydrocarbon group having one carbon atom, for example. k = 1 when Y¹¹ has no trivalent or tetravalent hydrocarbon groups having one carbon atom (for example, when Y¹¹ has a divalent hydrocarbon group having one carbon atom (-CH₂-) (for example, 1-6 such groups)).

R¹² may be H, Cl, Br, I, methyl, optionally substituted benzyl, optionally substituted phenyl. , and cyano. R¹² is preferably H, Cl or methyl. R¹² is more preferably methyl. When R¹² is methyl, a higher liquid-repellency can be obtained. R¹² may be H in view of particularly its reactivity.

Y¹¹ is preferably a divalent group. Examples of divalent to tetravalent hydrocarbon groups having one carbon atom are -CH₂-, -CH= with a branched structure and -C≡ with a branched structure.

Y¹¹ may be -Y'-, -Y'-Y'-, -Y'-C(=O)-, -C(=O)-Y'-, -Y'-C(=O)-Y'-, -Y'-X'-, -Y'-X'-Y'-, -Y'-X'-Y'-C(=O)-, -Y'-X'-C(=O)-Y'-, -Y'-X'-Y'-C(=O)-Y'-, or -Y'-X'-Y'-X'- wherein, Y' is each independently a direct bond, -O-, -NR'- (where R' is a hydrogen atom or a C₁₋₄-hydrocarbon group) or -S(=O)₂-, and X' is -(CH₂)ₘ- (where m is an integer of 1-5), a linear C₁₋₅-hydrocarbon group having an unsaturated bond, a C₁₋₅-hydrocarbon group having a branched structure, or -(CH₂)ₗ-C₆H₄-(CH₂)ₗ- (where l is each independently an integer of 0-5, and -C₆H₄- is a phenylene group) . It is preferable that Y¹¹ should not be a divalent hydrocarbon group singly.

Specific examples of Y¹¹ are -O-, -NH-, -O-C(=O)-, -NH-C(=O)-, -O-C(=O)-NH-, -NH-C(=O)-O-, -NH-C(=O)-NH-, -O-C₆H₄-, - NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C (=O)-O-, -O- (CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -O-(CH₂)ₘ-NH-S(=O)₂-, - O- (CH₂)ₘ-S(=O)₂-NH-, -NH- (CH₂)ₘ-NH-S(=O)₂-, -NH-(CH₂)ₘ-S(=O)₂-NH-, -NH- (CH₂)ₘ-O-C(=O)-NH-, -NH- (CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH- (CH₂)ₘ-O-C₆H₄-, or -NH- (CH₂)ₘ-NH-C₆H₄-, wherein m is an integer of 1-5 and particularly 2 or 4.

Y¹¹ is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂- or -O-(CH₂)ₘ-S(=O)₂-NH-, -NH-(CH₂)ₘ-O-C(=O)-, -NH-(CH₂)ₘ-NH-C(=O)-, -NH-(CH₂)ₘ-O-C(=O)-NH-, -NH-(CH₂)ₘ-NH-C(=O)-O-, or -NH-(CH₂)ₘ-NH-C(=O)-NH-, wherein m is an integer of 1-5 and particularly 2 or 4. Y¹¹ is more preferably -O-, -O-(CH₂)ₘ-O-C(=O)-NH-, -O-(CH₂)ₘ-NH-C(=O)-O- or -O-(CH₂)ₘ-NH-C(=O)-, -O-(CH₂)ₘ-NH-S(=O)₂- or -O-(CH₂)ₘ-S(=O)₂-NH-, and particularly preferably -O-(CH₂)ₘ-NH-C(=O)-.

Hydrophobic monomer (a1) is preferably free of a reactive group or hydrophilic group. Examples of the reactive groups are epoxy, chloromethyl, bromomethyl, iodomethyl, isocyanate, and block isocyanate. Examples of the hydrophilic groups are hydroxyl, polyalkylene oxide, amino, carboxylic acid, sulfonic acid, phosphoric acid, alkali metal or alkaline earth metal salt groups of carboxylic acid, sulfonic acid, or phosphoric acid, ammonium salt groups in which a chloride or bromide or iodide ion is a counter anion, and other ionic groups. Here, the reactive group may also serve as the hydrophilic group.

Hydrophobic monomer (a1) may have a water solubility at 25°C of 10 g/l or less, 5 g/l or less, 3 g/l or less, 1 g/l or less, 0.5 g/l or less, or 0.1 g/l or less and preferably 3 g/l or less. A homopolymer of hydrophobic monomer (a1) may have a water solubility at 25°C of 10 g/l or less, 5 g/l or less, 3 g/l or less, 1 g/l or less, 0.5 g/l or less, or 0.1 g/l or less and preferably 3 g/l or less.

A water contact angle of a homopolymer of hydrophobic monomer (a1) may be 75° or more, 80° or more, 85° or more, 90° or more, 95° or more, 100° or more, 101° or more, 103° or more, 105° or more, 110° or more, 115° or more, or 120° or more, and preferably 90° or more or 100° or more. The water contact angle of the homopolymer of hydrophobic monomer (a1) may be 160° or less, 150° or less, 140° or less, 130° or less, 125° or less, or 110° or less. The water contact angle within the aforementioned range is preferred in view of a liquid-repellency of a copolymer and particularly of a water-repellency. The water contact angle of the homopolymer may be a value obtained by spin-coating a surface of a silicon wafer substrate with a homopolymer solution with a solid content of 1.0% in chloroform, dropping 2 µL of water on the coating film, and measuring the contact angle 1 second after the dropping.

Specific examples of hydrophobic monomer (a1) are as follows. Each of the compounds of the following chemical formulas is an acrylic compound having a hydrogen atom at the α-position, and may also be a methacrylic compound having a methyl group at the α-position or an α-chloroacrylic compound having a chlorine atom at the α-position.

CH₂=CHC(=O)OC₁₈H₃₇

CH₂=CHC(=O)OCₙH₂ₙ₊₁

CH₂=CHC(=O)OC₂H₄OC(=O)NHC₁₈H₃₇

CH₂=CHC(=O)OC₂H₄NHC(=O)OC₁₈H₃₇

CH₂=CHC(=O)OCₘH₂ₘNHC(=O)CₙH₂ₙ₊₁

CH₂=CHC(=O)OC₂H₄OC(=O)NHCₙH₂ₙ₊₁

CH₂=CHC(=O)OC₂H₄NHC(=O)OCₙH₂ₙ₊₁

CH₂=CHC(=O)OC₂H₄NHC(=O)NHCₙH₂ₙ₊₁

CH₂=CHC(=O)OC₄H₈OC(=O)NHCₙH₂ₙ₊₁

CH₂=CHC(=O)NHCₘH₂ₘOC(=O)NHCₙH₂ₙ₊₁

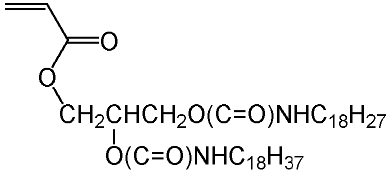

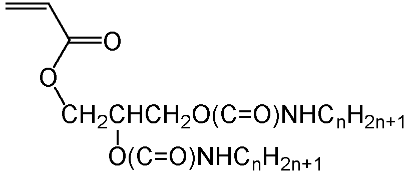

CH₂=CHC(=O)OCₘH₂ₘNHSO₂CₙH₂ₙ₊₁

CH₂=CHC(=O)OCₘH₂ₘSO₂NHCₙH₂ₙ₊₁

wherein n is a numeral of 3-40 and m is a numeral of 1-5.

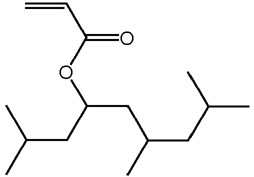

Preferred specific examples of hydrophobic monomer (a1) include stearyl (meth)acrylate, butyl (meth)acrylate, t-butyl (meth)acrylate, octyl (meth)acrylate, isooctyl (meth)acrylate, decyl (meth)acrylate, isodecyl (meth)acrylate, nonyl (meth)acrylate, isononyl (meth)acrylate, lauryl (meth)acrylate, icosyl (meth)acrylate, behenyl (meth)acrylate, stearyl α-chloroacrylate, icosyl α-chloroacrylate, behenyl α-chloroacrylate, stearamidoethyl (meth)acrylate, 2-stearamidoethyl acrylate, and CH₂=CHC(=O) OC₂H₄NHSO₂C₁₈H₃₇. These may be used singly or in combination of two or more thereof.

In view of the liquid-repellency of the dispersion, hydrophobic monomer (a1) preferably contains a hydrophobic monomer (a1) having an amide group, urea group or urethane group. Hydrophobic monomer (a1) may be a combination of a hydrophobic monomer (a1) having an amide group, urea group or urethane group and a hydrophobic monomer (a1) free of an amide group, urea group or urethane group. Examples of hydrophobic monomer (a1) having an amide group, urea group or urethane group include CH₂=C(-R¹²)-C(=O)-O-(CH₂)ₘ-NH-C(=O)-R¹¹, CH₂=C(-R¹²)-C(=O)-O-(CH₂)ₘ-O-C(=O)-NH-R¹¹, CH₂=C(-R¹²)-C(=O)-O-(CH₂)ₘ-NH-C(=O)-O-R¹¹, and CH₂=C(-R¹²)-C(=O)-O-(CH₂)ₘ-NH-C(=O)-NH-R¹¹. Hydrophobic monomer (a1) may contain CH₂=C(-R¹²)-C(=O)-O-(CH₂)ₘ-NH-C(=O)-R¹¹.

### (Chloride monomer (a2))

Non-fluorine copolymer (A) contains a repeating unit derived from at least one chloride monomer (a2) selected from vinyl chloride and vinylidene chloride. Chloride monomer (a2) is preferably vinyl chloride.

### (Crosslinkable monomer (a4))

Non-fluorine copolymer (A) may have a repeating unit derived from a crosslinkable monomer (a4). Crosslinkable monomer (a4) is a monomer capable of imparting crosslinkability to a copolymer and may have at least two selected from a reactive group and an olefinic carbon-carbon double bond. Crosslinkable monomer (a4) may be a compound having at least two ethylenically unsaturated double bonds, or a compound having at least one ethylenically unsaturated double bond and at least one reactive group.

Crosslinkable monomer (a4) preferably has a (meth)acrylic group as an ethylenically unsaturated double bond, and for example, it may have a (meth)acrylate group or (meth)acrylamide group as an ethylenically unsaturated double bond.

Examples of the reactive groups include hydroxyl, epoxy, chloromethyl, block isocyanate, amino, carboxyl, carbonyl, and isocyanate (block isocyanate).

Specific examples of crosslinkable monomer (a4) include diacetone (meth)acrylamide, N-methylol (meth)acrylamide, hydroxyethyl (meth)acrylamide, glycidyl (meth)acrylate, hydroxymethyl (meth)acrylate, hydroxyethyl (meth)acrylate, 2,3-dihydroxypropyl (meth)acrylate, 3-chloro-2-hydroxypropyl (meth)acrylate, 2-acetoacetoxyethyl (meth)acrylate, butadiene, isoprene, chloroprene, vinyl monochloroacetate, vinyl methacrylate, glycidyl(meth)acrylate, 1,4-butanediol di(meth)acrylate, 1,6-hexanediol di(meth)acrylate, 1,9-nonanediol di(meth)acrylate, neopentylglycol di(meth)acrylate, and an acrylamide compound from any of these acrylates. These may be used singly or in combination of two or more thereof.

### (Other monomer (a5))

Non-fluorine copolymer (A) may contain a repeating unit derived from other monomer (a5) than monomers (a1)-(a4).

Specific examples of other monomers (a5) include ethylene, halogenated olefins, vinyl acetate, acrylonitrile, alkoxypolyalkylene glycol (meth)acrylate, and vinylalkyl ether. Other fluorine-free monomers are not limited to these examples. These may be used singly or in combination of two or more thereof.

### (Composition of polymer)

The amount of repeating units derived from hydrophobic monomer (a1) may be 15 wt.% or more, 20 wt.% or more, 25 wt.% or more, 35 wt.% or more, 45 wt.% or more, 55 wt.% or more, or 65 wt.% or more, relative to non-fluorine copolymer (A). The amount of repeating units derived from hydrophobic monomer (a1) may be 98 wt.% or less, 95 wt.% or less, 90 wt.% or less, 80 wt.% or less, 70 wt.% or less, or 60 wt.% or less, relative to non-fluorine copolymer (A).

In the repeating units derived from hydrophobic monomer (a1), the proportion of hydrophobic monomer (a1) having an amide group, urea group or urethane group may be 1 wt.% or more, 3 wt.% or more, 5 wt.% or more, 10 wt.% or more, 20 wt.% or more, 30 wt.% or more, 50 wt.% or more, or 75 wt.% or more. In the repeating units derived from hydrophobic monomer (a1), the proportion of hydrophobic monomer (a1) having an amide group, urea group, or urethane group may be 100 wt.% or less, 90 wt.% or less, 80 wt.% or less, or 70 wt.% or less.

The amount of repeating units derived from chloride monomer (a2) may be 3 wt.% or more, 5 wt.% or more, 10 wt.% or more, 15 wt.% or more, 20 wt.% or more, 25 wt.% or more, or 35 wt.% or more, relative to non-fluorine copolymer (A). The amount of repeating units derived from chloride monomer (a2) may be 80 wt.% or less, 70 wt.% or less, 60 wt.% or less, 50 wt.% or less, 40 wt.% or less, 30 wt.% or less, 20 wt.% or less, or 10 wt.% or less, relative to non-fluorine copolymer (A) and preferably 60 wt.% or less.

The amount of repeating units derived from crosslinkable monomer (a4) may be 0.5 wt.% or more, 1 wt.% or more, 3 wt.% or more, or 4 wt.% or more, relative to non-fluorine copolymer (A). The amount of repeating units derived from crosslinkable monomer (a4) may be 30 wt.% or less, 20 wt.% or less, 15 wt.% or less, 10 wt.% or less, 7.5 wt.% or less, or 5 wt.% or less, relative to non-fluorine copolymer (A).

The amount of repeating units derived from other monomer (a5) may be 0.5 wt.% or more, 1 wt.% or more, 3 wt.% or more, or 4 wt.% or more, relative to non-fluorine copolymer (A). The amount of repeating units derived from other monomer (a5) may be 30 wt.% or less, 20 wt.% or less, 15 wt.% or less, 10 wt.% or less, or 5 wt.% or less, relative to non-fluorine copolymer (A).

The amount of repeating units derived from chloride monomer (a2) may be 5 parts by weight (pbw) or more, 10 pbw or more, 25 pbw or more, 50 pbw or more, 75 pbw or more, or 100 pbw or more, per 100 pbw of repeating units derived from hydrophobic monomer (a1). The amount of repeating units derived from chloride monomer (a2) may be 150 pbw or less, 125 pbw or less, 100 pbw or less, 75 pbw or less, 50 pbw or less, or 25 pbw or less, per 100 pbw of repeating units derived from hydrophobic monomer (a1).

The amount of repeating units derived from crosslinkable monomer (a4) may be 2.5 pbw or more, 5 pbw or more, 12.5 pbw or more, 25 pbw or more, 35 pbw or more, or 45 pbw or more, per 100 pbw of repeating units derived from hydrophobic monomer (a1). The amount of repeating units derived from crosslinkable monomer (a4) may be 75 pbw or less, 60 pbw or less, 50 pbw or less, 40 pbw or less, 30 pbw or less, 20 pbw or less, or 10 pbw or less, per 100 pbw of repeating units derived from hydrophobic monomer (a1).

The amount of repeating unit derived from other monomer (a5) may be 2.5 pbw or more, 5 pbw or more, 12.5 pbw or more, 25 pbw or more, 35 pbw or more, or 45 pbw or more, per 100 pbw of repeating units derived from hydrophobic monomer (a1). The amount of repeating units derived from other monomer (a5) may be 75 pbw or less, 60 pbw or less, 50 pbw or less, 40 pbw or less, 30 pbw or less, 20 pbw or less, or 10 pbw or less, per 100 pbw of repeating units derived from hydrophobic monomer (a1).

The total of the repeating units derived from hydrophobic monomer (a1), the repeating units derived from chloride monomer (a2), and the repeating units derived from hydrocarbon group-containing monomer (c) may be 75 wt.% or more, 80 wt.% or more, 85 wt.% or more, 90 wt.% or more, or 95 wt.% or more, relative to non-fluorine copolymer (A).

### [Unreacted chloride monomer (a2)]

Unreacted chloride monomer (a2) is at least one selected from vinyl chloride and vinylidene chloride.

### [Liquid medium (B)]

The dispersion includes a liquid medium (B). Liquid medium (B) contains a water-soluble organic solvent (b1). Liquid medium (B) may be a mixture of water-soluble organic solvent (b1) and water. Liquid medium (B) may also contain other solvents.

Water-soluble organic solvent (b1) is a water-soluble organic solvent having at least two groups selected from a hydroxy group and ether group. Water-soluble organic solvent (b1) is preferably aliphatic and may be, for example, a linear aliphatic group. Water-soluble organic solvent (b1) may be a compound composed only of carbon, hydrogen, and oxygen atoms. Water-soluble organic solvent (b1) contained can improve feeling of use, durability, and the others of the product treated with the dispersion. For example, issues such as bleeding of dyes, lowering of heat resistance, and reduction of fastness to rubbing can be improved.

Water-soluble organic solvent (b1) preferably has at least one hydroxy group. Water-soluble organic solvent (b1) preferably has one hydroxy group and at least one group selected from a hydroxy group and ether group. The number of hydroxy groups that water-soluble organic solvent (b1) has may be 1 or more, 2 or more, 3 or more, or 4 or more, and may be 5 or less, 4 or less, 3 or less, or 2 or less, and it is, for example, 1 (monool), 2 (diol), or 3 (triol). Water-soluble organic solvent (b1) may or may not have an ether group. The number of ether groups that water-soluble organic solvent (b1) has may be 1 or more, 2 or more, 3 or more, or 4 or more, and may be 5 or less, 4 or less, 3 or less, or 2 or less, and it is, for example, 1 (monoether), 2 (diether), or 3 (triether). Water-soluble organic solvent (b1) may be a glycol compound or a monoalkyl ether thereof.

The boiling point of water-soluble organic solvent (b1) may be 100°C or higher, 120°C or higher, 140°C or higher, 160°C or higher, 180°C or higher, 200°C or higher, 220°C or higher, 240°C or higher, or 260°C or higher, preferably 140°C or higher, and more preferably 180°C or higher. The boiling point of water-soluble organic solvent (b1) may be 425°C or lower, 400°C or lower, 375°C or lower, 350°C or lower, 325°C or lower, 300°C or lower, 275°C or lower, 250°C or lower, 225°C or lower, or 200°C or lower, and preferably 350°C or lower.

The water solubility of water-soluble organic solvent (b1) (g/100g) at 25°C may be 50 or more, 70 or more, 100 or more, or infinite (water miscible), preferably 100 or more, and more preferably infinite (water miscible). The water solubility of water-soluble organic solvent (b1) (g/100g) at 25°C may be 200 or less or 150 or less.

Specific examples of water-soluble organic solvent (b1) include glycols that are monomer-, oligomer-, or polyalkylene-glycols with (C₂₋₆-alkylene units, or thioglycols, such as ethylene glycol, 1,2-propylene glycol, 1,3-propylene glycol, 1,2-butylene glycol, 1,4-butylene glycol, pentamethylene glycol, 1,6-hexylene glycol, 1,2-hexylene glycol, diethylene glycol, triethylene glycol, tetraethylene glycol, dipropylene glycol, polyethylene glycol, polypropylene glycol, thiodiglycol, and dithiodiglycol; polyols (particularly triols), such as glycerin and hexane-1,2,6-triol; C₁₋₄-alkyl ethers of polyhydric alcohols (preferably monoethers, diethers), such as ethylene glycol monomethyl ether, ethylene glycol monoethyl ether, diethylene glycol monomethyl ether, diethylene glycol monoethyl ether, and diethylene glycol monobutyl ether (butylcarbitol) or triethylene glycol monomethyl ether or triethylene glycol monoethyl ether. These may be used singly or in combination of two or more thereof.

Examples of the other solvent include esters (for example, C₂₋₃₀-esters, specifically ethyl acetate and butyl acetate), ketones (for example, C₂₋₃₀-ketones, specifically methyl ethyl ketone and diisobutyl ketone), alcohols (for example, C₁₋₃₀-alcohols, specifically isopropyl alcohol), ethers, alkanes, toluene-based solvents, and halogenated carbon. Specific examples of the other solvents include acetone, isopropyl alcohol, chloroform, HCHC-225, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachloro difluoroethane, trichloro trifluoroethane, and mixed solvents thereof. These may be used singly or in combination of two or more thereof.

Liquid medium (B) may be a polymerization solvent for carrying out a polymerization reaction. Liquid medium (B) may be prepared by adding each solvent after polymerization. For example, a monomer can be polymerized in the presence of an organic solvent to produce a non-fluorine copolymer (A), and then water may be added followed by distillation of the organic solvent if necessary.

### [Surfactant]

The dispersion may include a surfactant in the case of an aqueous dispersion. The surfactant includes at least one of a nonionic surfactant, a cationic surfactant and an anion surfactant. The surfactant may include an amphoteric surfactant. The surfactant may not be included. The dispersion generally includes a surfactant in the case of an aqueous dispersion. The surfactant may be added before or after polymerization, or may not be added. Even in the case of not adding the surfactant, an aqueous dispersion in which non-fluorine copolymer (A) is dispersed in an aqueous medium can be obtained due to the characteristics of non-fluorine copolymer (A) itself.

The nonionic surfactant is a nonionic surfactant having an oxyalkylene group. The number of carbon atoms of the alkylene group in the oxyalkylene group is preferably 2-10. Preferably the number of oxyalkylene groups in a molecule of the nonionic surfactant is generally 2-100. The nonionic surfactant may be, for example, an alkylene oxide adduct of a linear and/or branched aliphatic (saturated and/or unsaturated) group, a polyalkylene glycol ester of a linear and/or branched fatty acid (saturated and/or unsaturated), a polyoxyethylene (POE)/polyoxypropylene (POP) copolymer (random or block copolymer), and an alkylene oxide adduct of acetylene glycol. Among them, the nonionic surfactant is preferably a surfactant such that the structures of the alkylene oxide addition moiety and polyalkylene glycol moiety are polyoxyethylene (POE) or polyoxypropylene (POP) or POE/POP copolymer (which may be a random or block copolymer). The nonionic surfactants are preferably aliphatic. Specific examples of the nonionic surfactant include ether-based compounds such as polyoxyethylene nonylphenyl ether, polyoxyethylene octylphenyl ether, polyoxyethylene dodecylphenyl ether, polyoxyethylene lauryl ether, polyoxyethylene oleyl ether, polyoxyethylene alkyl ether, polyoxyaralkyl alkyl ether; ester-based compounds such as polyoxyethylene oleic acid, polyoxyethylene oleate, polyoxyethylene distearate, sorbitan laurate, sorbitan monostearate, sorbitan monooleate, sorbitan sesquiolate, polyoxyethylene monooleate, polyoxyethylene stearate; and acetylene glycol-based compounds such as 2,4,7,9-tetramethyl-5-decyne-4,7-diol, 3,6-dimethyl-4-octyne-3,6-diol, and 3,5-dimethyl-1-hexyne-3-ol. These may be used singly or in combination of two or more thereof.

The cationic surfactant may be an amine salt, quaternary ammonium salt, or oxyethylene-added ammonium salt. Specific examples of the cationic surfactant include, but are not limited to, an alkyl amine salt, amine salt type surfactants such as an amino alcohol fatty acid derivative, polyamine fatty acid derivative, and imidazoline, and quaternary ammonium salt type surfactants such as an alkyl trimethylammonium salt, dialkyl dimethylammonium salt, alkyl dimethyl benzyl ammonium salt, pyridinium salt, alkyl isoquinolinium salt, and benzethonium chloride. Specific examples of the cationic surfactant include stearyl trimethyl ammonium chloride, dodecyl trimethyl ammonium acetate, trimethyl tetradecyl ammonium chloride, hexadecyl trimethyl ammonium bromide, trimethyl octadecyl ammonium chloride, (dodecyl methyl benzyl) trimethylammonium chloride, benzyl dodecyldimethylammonium chloride, methyl dodecyldi(hydropolyoxyethylene) ammonium chloride, benzyl dodecyldi(hydropolyoxyethylene) ammonium chloride, and N-[2-(diethylamino)ethyl]oleamide hydrochloride. These may be used singly or in combination of two or more thereof.

Examples of the anionic surfactant include a fatty acid salt (the number of carbon atoms of the fatty acid is, for example, 8-30), sulfonate (for example, alkyl sulfonate, alkyl benzene sulfonate (the number of carbon atoms of the alkyl group is, for example, 8-30)), and sulfate salt (for example, alkyl sulfate salt (the number of carbon atoms of the alkyl group is, for example, 8-30)).

Examples of the anionic surfactant include sodium lauryl sulfate, triethanolamine lauryl sulfate, sodium polyoxyethylene lauryl ether sulfate, sodium polyoxyethylene nonylphenyl ether sulfate, triethanolamine polyoxyethylene lauryl ether sulfate, sodium cocoyl sarcosine, sodium N-cocoyl methyl taurate, sodium polyoxyethylene coconut alkyl ether sulfate, sodium diether hexyl sulfosuccinate, sodium α-olefin sulfonate, sodium lauryl phosphate, and sodium polyoxyethylene lauryl ether phosphate. These may be used singly or in combination of two or more thereof.

Examples of the amphoteric surfactant includes alanines, imidazolinium betaines, amido betaines, and betaine acetate. Specific examples include lauryl betaine, stearyl betaine, lauryl carboxymethyl hydroxyethyl imidazolinium betaine, lauryl dimethylaminoacetate betaine, and fatty acid amidopropyl dimethylamino acetate betaine. These may be used singly or in combination of two or more thereof.

The nonionic surfactants, cationic surfactants, anionic surfactants, and amphoteric surfactants each may be used singly or in combination of two or more thereof. The surfactant is preferably the nonionic surfactant and/or the cationic surfactant. It may be a combination of the nonionic surfactant and the cationic surfactant.

### [Curing agent]

The dispersion may include a curing agent (active hydrogen-reactive compound or active hydrogen-containing compound). The curing agent may be added to the dispersion after polymerization of the non-fluorine copolymer (A).

The dispersion may include the curing agent (crosslinking agent) to favorably cure the non-fluorine copolymer (A). The curing agent may be an active hydrogen-reactive compound or an active hydrogen-containing compound that reacts with active hydrogen or an active hydrogen-reactive group of non-fluorine copolymer (A). Examples of the active hydrogen-reactive compound include a polyisocyanate compound, an epoxy compound, a chloromethyl group-containing compound, a carboxyl group-containing compound, and a hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may be a polyisocyanate compound. The polyisocyanate compound is a compound having two or more isocyanate groups in one molecule. The polyisocyanate compound serves as a crosslinking agent. Examples of the polyisocyanate compound include an aliphatic polyisocyanate, alicyclic polyisocyanate, aromatic-aliphatic polyisocyanate, aromatic polyisocyanate, and derivatives of these polyisocyanates.

Examples of the aliphatic polyisocyanate include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate 1,3-butylene diisocyanate, 2,4,4- or 2,2,4-trimethylhexamethylene diisocyanate, and 2,6-diisocyanatomethylcaproate, and aliphatic triisocyanates such as lysine ester triisocyanate, 1,4,8-triisocyanatooctane, 1,6,11-triisocyanatoundecane, 1,8-diisocyanato-4-(isocyanatomethyl)octane, 1,3,6-triisocyanatohexane, and 2,5,7-trimethyl-1,8-diisocyanato-5-(isocyanatomethyl)octane. These may be used singly or in combination of two or more thereof.

Examples of the alicyclic polyisocyanate include an alicyclic diisocyanate and alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of aromatic polyisocyanates include m-phenylenediisocyanate, p-phenylenediisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylenediisocyanate or a mixture thereof, triphenylmethane-4,4',4"-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in an aqueous solution and can be used in the same aqueous solution as the dispersion.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include a phenol-based compound, lactam-based compound, aliphatic alcohol-based compound, and oxime-based compound. The polyisocyanate compounds can be used singly or in combination of two or more thereof.

The epoxy compound is a compound having an epoxy group. Examples of the epoxy compound include an epoxy compound having a polyoxyalkylene group, for example, a polyglycerol polyglycidyl ether and polypropylene glycol diglycidyl ether; and sorbitol polyglycidyl ether.

The chloromethyl group-containing compound is a compound having a chloromethyl group. Examples of the chloromethyl group-containing compound include chloromethyl polystyrene.

The carboxyl group-containing compound is a compound having a carboxyl group. Examples of the carboxyl group-containing compound include (poly)acrylic acid, and (poly)methacrylic acid.

Specific examples of the ketone group-containing compound include (poly)diacetone acrylamide, and diacetone alcohol.

Specific examples of the hydrazide compound include hydrazine, carbohydrazide, and adipic acid hydrazide.

Specific examples of the melamine compound include a melamine resin, and methyl etherified melamine resin.

### [Other components]

The dispersion may contain other components other than those described above. Generally, other components are added after production of non-fluorine copolymer (A). Examples of other components include water- and/or oil- repellent agents, anti-slip agents, antistatic agents, antiseptic agents, ultraviolet absorbers, antibacterial agents, deodorants, perfumes, reactive silicone components, and silicone resins. These may be used singly or in combination of two or more thereof. In addition to the above components, examples of other components include texture modifiers, softening agents, antibacterial agents, flame retardants, coating material fixing agents, wrinkle-resistant agents, drying rate adjusters, crosslinking agents, film formation agents, compatibilizing agents, antifreezing agents, viscosity modifiers, ultraviolet absorbers, antioxidants, pH adjusters, insect repellents, antifoaming agents, anti-shrinkage agents, laundry wrinkle-resistant agents, shape retention agents, drape retention agents, ironing improving agents, whitening agents, bleaching agents, fabric softening clays, anti-dye transfer agents such as polyvinylpyrrolidone, polymer dispersants, soil release agents, scum dispersants, fluorescent brightening agents such as 4,4-bis(2-sulfostyryl)biphenyl disodium (Tinopearl CBS-X manufactured by Ciba Specialty Chemicals Corporation), dye fixing agents, anti-color fading agents such as 1,4-bis(3-aminopropyl) piperazine, stain removing agents, enzymes such as cellulase, amylase, protease, lipase, and keratinase as fiber surface modifiers, foam inhibitors, silk protein powder that can impart silky texture and functions such as moisture absorption and desorption properties, surface modifiers thereof, emulsified dispersions, and specifically K-50, K-30, K-10, A-705, S-702, L-710, FP series (Idemitsu Petrochemical Co., Ltd.), hydrolyzed silk liquid (Jomo), Silk Gen G Solble S (ICHIMARU FHARCOS Co., Ltd.), a nonionic polymer compound composed of alkylene terephthalate and/or alkylene isophthalate units and polyoxyalkylene units, for example, antifouling agent such as FR627 manufactured by GOO CHEMICAL CO., LTD. and SRC-1 manufactured by Clariant Japan K. K, can be compounded. These may be used singly or in combination of two or more thereof.

### (Water- and/or oil-repellent agent)

Examples of the water- and/or oil-repellent agent include saturated or unsaturated hydrocarbon compounds, and silicone-based compounds. The water- and/or oil-repellent agent may be a non-fluorine agent. The saturated or unsaturated hydrocarbon-based compounds are preferably saturated hydrocarbons. The number of carbon atoms of the saturated or unsaturated hydrocarbon-based compound may be 15 or more and preferably 20-300, for example, 25-100. Specific examples of the saturated or unsaturated hydrocarbon-based compounds include paraffins. Examples of the silicone-based compound include silicones, and siloxane group-containing acrylic polymers. These may be used singly or in combination of two or more thereof.

### (Anti-slip agent)

Examples of the anti-slip agent include resins, such as a urethane resin, acrylic resin, silicones (e.g. reactive silicone and silicone resin), and a combination of these resins, and inorganic particles (which may undergo hydrophobic surface treatment), such as aluminum compounds (for example, alumina), silicon compounds (for example, silica), and titanium compounds. These may be used singly or in combination of two or more thereof.

### (Antistatic agent)

Examples of the antistatic agent include cationic antistatic agents with cationic functional groups such as quaternary ammonium salts, pyridinium salts, primary-, secondary-, and tertiary-amino groups; anionic antistatic agents with anionic functional groups such as sulfonic acid salts or sulfuric acid ester salts, phosphonic acid salts, phosphoric acid ester salts; amphoteric antistatic agents such as alkyl betaine and derivatives thereof, imidazoline and derivatives thereof, alanine and derivatives thereof, and nonionic antistatic agents such as amino alcohols and derivatives thereof, glycerin and derivatives thereof, and polyethylene glycol and derivatives thereof. The antistatic agent may be an ion-electric conductive polymer obtained by polymerizing or copolymerizing a monomer having these cationic, anionic or amphoteric ion-electric conductive groups. These may be used singly or in combination of two or more thereof.

### (Antiseptic agent)

The antiseptic agent may be used mainly to enhance antisepsis power and bactericidal power to maintain antiseptic during long-term storage. Examples of the antiseptic agent include isothiazolone-based organosulfur compounds, benzisothiazolone-based organosulfur compounds, benzoic acids, and 2-bromo-2-nitro-1,3-propanediol. The content of antiseptic agent is preferably 0.0001-1 wt.% relative to the total weight of the dispersion. When the content of antiseptic agent is the lower limit value of the aforementioned range or more, a sufficient effect of antiseptic agent added is obtained, and when the content is the upper limit value or less, favorable storage stability of the dispersion is obtained.

### (Ultraviolet absorber)

The ultraviolet absorber is an agent that has a protection effect against ultraviolet rays, and is e.g. a component that absorbs ultraviolet rays, converts them into infrared rays and visible rays, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

### (Antibacterial agents)

The antibacterial agent is a component that exhibits the effect of inhibiting bacteria from growing on fibers and further exhibits the effect of inhibiting generation of unpleasant odors derived from decomposition products of microorganisms. Examples of the antibacterial agent include cationic bactericidal agents such as quaternary ammonium salts (excluding component (A)), zinc bis-(2-pyridylthio-1-oxide), polyhexamethylene biguanidine hydrochloride, 8-oxyquinoline, and polylysine.

### (Deodorants)

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO 2012/090580).

### (Perfume)

The perfumes are not limited, and a list of usable perfume materials can be found in various literatures, including "Perfume and Flavor Chemicals", Vol. I and II, Steffen Arctander, Allured Pub. Co. (1994) and "Synthetic Perfume Chemistry and Product Knowledge", Genichi Indo, The Chemical Daily Co., Ltd. (1996) and "Perfume and Flavor Materials of Natural Origin", Steffen Arctander, Allured Pub. Co. (1994) and "Encyclopedia of Fragrance", edited by the Japan Perfume Association, Asakura Publishing Co., Ltd. (1989) and "Perfumery Material Performance V.3.3", Boelens Aroma Chemical Information Service (1996) and "Flower oils and Floral Compounds In Perfumery", Danute Lajaujis Anonis, Allured Pub. Co. (1993), each of which is incorporated herein as a part of the disclosure of the present description by reference.

### (Reactive silicone component)

The dispersion may contain a reactive silicone component in view of its functional improvements. Examples of the reactive silicone component include polysiloxanes having a reactive group on a side chain, at one terminal, at each of both terminals, or on a side chain and each of both terminals, and a polysiloxane having a reactive group on a side chain and/or at each of both terminals is preferable in view of excellent slippage properties as well as antifouling properties (SR properties) at the same time. The reactive silicone component is not limited as long as it has a reactive group in its molecule, and examples thereof include an amino-modified silicone, epoxy-modified silicone, carboxy-modified silicone, and methyl hydrogen silicone.

Examples of the amino-modified silicone include those having a structure in which an amino group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. The amino group may be any of a primary, secondary or tertiary amino group. Examples of the organic group to which an amino group is bonded include: 2-aminoethyl, N-methyl-2-aminoethyl, N,N-dimethyl-2-aminoethyl, N-ethyl-2-aminoethyl, N,N-diethyl-2-aminoethyl, N,N-methylethyl-2-aminoethyl, 3-aminopropyl, N-methyl-3-aminopropyl, N,N-dimethyl-3-aminopropyl, N-ethyl-3-aminopropyl, N,N-diethyl-3-aminopropyl, and N,N-methylethyl-3-aminopropyl. These functional groups may be on a side chain of a polysiloxane or at the terminal thereof.

Examples of the epoxy-modified silicone include those having a structure in which an epoxy group is bonded to an organic group directly connected to a silicon atom. The organic group may be either an alkylene group or a divalent aromatic group. The epoxy group in this case usually bonds to the organic group to form a glycidyl ether. Examples of such a functional group include a 3-glycidoxypropyl group and 2-glycidoxyethyl group. These functional groups may be on a side chain of a polysiloxane or at the terminal thereof.

Examples of the carboxy-modified silicones include those having a structure in which a carboxy group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. Examples of such a functional group include a 3-carboxypropyl group and 2-carboxyethyl group. These functional groups may be on a side chain of a polysiloxane or at the terminal thereof.

The methyl hydrogen silicone is silicone in which a side chain of a polydiorganosiloxane is partially substituted with hydrogen and the hydrogen atom is directly connected to a silicon atom. In using the methyl hydrogen silicones, a catalyst may be used in order to improve their reactivity. For example, zinc, tin, manganese, cobalt, iron, and amine-based catalysts can be used. These catalysts are preferably organic acid metal salts, and the organic acid is preferably a fatty acid. In view of safety, zinc stearate can be used. The amount of the catalyst used is preferably 10-40% relative to the methyl hydrogen silicone in view of facilitating exhibiting the effect. Two or more types of amino-modified, epoxy-modified, and carboxy-modified silicones and the methyl hydrogen silicones may be mixed. Preferably, all of the silicones have reactive groups and are those having film formability. The film formability means that after the silicone in an emulsion state is adhered to a fiber surface, the silicone forms a solid film and does not become an oil or gel.

### (Silicone resin)

The dispersion may contain a silicone resin in view of functional improvement. The silicone resin is a silicone resin composed of at least one selected from a R₃SiO_{1/2} unit (M unit), RSiO_{3/2} unit (T unit), and SiO_{1/2} unit (Q unit), wherein R is a linear or branched monovalent C₁₋₁₈-alkyl group; provided that silicone resins composed only of the M unit and those composed only of the Q unit are excluded. A silicone resin (B) is preferably a resin that is free of a R₂SiO_{2/2} unit (D unit) in view of exhibiting the effect of the present disclosure.

The silicone resin is preferably in a sol state. Examples of R include methyl, ethyl, propyl, isopropyl, butyl, isobutyl, hexyl, octyl, 2-ethylhexyl, decyl, cetyl, and stearyl. In view of stability in a case in which silicone resin (B) is in a sol state, and availability and price of materials, R is preferably methyl, and in particular, 90% or more of all of R is preferably methyl. Different types of groups may be used as R in combination.

The R₂SiO_{2/2} unit (D unit) contained in the silicone resin may impair low slippage properties of a water-repellent agent. Moreover, a silicone resin composed only of the Q unit can prevent water repellent performance as a water-repellent agent.

Examples of the structure of the silicone resin include silicone resins composed of (i) a M unit and Q unit, (ii) a M unit, T unit and Q unit, (iii) a M unit and T unit, (iv) a T unit and Q unit, and (v) only a T unit, and it may preferably be a silicone resin composed of (i) a M unit and Q unit and a silicone resin composed of (v) only a T unit. The molar ratio of M units to Q units (M/Q) in a silicone resin composed of (i) a M unit and Q unit is preferably M/Q = 0.6-1.3, and more preferably M/Q = 0.8-1.1. Two or more types of these silicone resins may be used in combination.

Silicone resin (B) can also contain a constituent unit containing a hydroxyl group bonded to a silicon atom. Specific examples thereof include a (HO)RSiO_{2/2} unit, (HO)₂RSiO_{1/2} unit, (HO)SiO_{3/2} unit, (HO)₂SiO_{2/2} unit, and (HO)₃SiO_{1/2} unit, and one or more of the hydroxyl groups may be replaced with an alkoxy group represented by an RO group.

A sol containing the silicone resin can be obtained by a production method in which an organodisiloxane and tetraalkoxysilane and their partial hydrolytic condensation products are homogeneously dispersed and polymerized in water containing a surfactant, as described in JP 3852921B, or by a production method in which the silane compound described below is hydrolyzed in water.

A production method for hydrolyzing a silane compound in water will be described in detail. Any silane compound can be used as a starting material for the production as long as it has a chloro- or alkoxy-type hydrolyzable group, contains one, three or four hydrolyzable groups, and has an alkyl group that satisfies the aforementioned conditions. Specific examples of the silane compound that can be used include tetrachlorosilane, tetramethoxysilane, tetraethoxysilane, tetrabutoxysilane, methyltrichlorosilane, methyltrimethoxysilane, methyltriethoxysilane, methyltriisopropoxysilane, methyltributoxysilane, ethyltrichlorosilane, ethyltrimethoxysilane, ethyltriethoxysilane, propyltrichlorosilane, propyltrimethoxysilane, propyltriethoxysilane, iosopropyltrichlorosilane, isopropyltrimethoxysilane, isopropyltriethoxysilane, butyltrichlorosilane, butyltrimethoxysilane, butyltriethoxysilane, isobutyltrichlorosilane, isobutyltrimethoxysilane, isobutyltriethoxysilane, hexyltrichlorosilane, hexyltrimethoxysilane, hexyltriethoxysilane, 2-ethylhexyltrichlorosilane, 2-ethylhexyltrimethoxysilane, 2-ethylhexyltriethoxysilane, decyltrichlorosilane, decyltrimethoxysilane, decyltriethoxysilane, cetyltrichlorosilane, cetyltrimethoxysilane, cetyltriethoxysilane, stearyltrichlorosilane, stearyltrimethoxysilane, stearyltriethoxysilane, trimethylchlorosilane, trimethylmethoxysilane, trimethylethoxysilane, trimethylisopropoxysilane, dimethylethylchlorosilane, dimethylethylmethoxysilane, dimethylethylethoxysilane, dimethylpropylchlorosilane, dimethylpropylmethoxysilane, dimethylpropylethoxysilane, dimethylisopropylchlorosilane, dimethylisopropylmethoxysilane, dimethylisopropylethoxysilane, dimethylhexylchlorosilane, dimethylhexylmethoxysilane, dimethylhexylethoxysilane, dimethyldecylchlorosilane, dimethyldecylmethoxysilane, dimethyldecylethoxysilane, dimethylcetylchlorosilane, dimethylcetylmethoxysilane, dimethylcetylethoxysilane, dimethylstearylchlorosilane, dimethylstearylmethoxysilane, dimethylstearylethoxysilane, and partial hydrolysates thereof. In terms of handling, facilitation of removal of byproducts and availability of the material, methoxysilane or ethoxysilane is more preferably used. One of these silane compounds or a mixture of two or more thereof may be used.

As the methods for hydrolyzing silane compounds in water, any of general methods usually known can be employed. Specifically, they are a method in which a hydrolysis reaction is carried out while a silane compound is added dropwise into water, and a method in which water and the silane compound are mixed in batch followed by carrying out a hydrolysis reaction.

Upon carrying out the hydrolysis reaction, a hydrolysis catalyst may be used. Conventional known catalysts can be used as the hydrolysis catalyst, and acidic or alkaline catalysts are suitably used. For acidic catalysts, hydrogen halide, carboxylic acid, sulfonic acid, acidic or slightly acidic inorganic salts, and solid acids such as ion exchange resins are preferred. For alkaline catalysts, sodium hydroxide, potassium hydroxide, alkali metal salts such as sodium carbonate, potassium carbonate, and sodium hydrogen carbonate, alkali metal silanolates such as sodium silanolate and potassium silanolate, amines such as triethylamine, diethylamine and aniline, and ammonia water can be used, for example. The amount of catalyst added is preferably adjusted so that a pH of an aqueous solution is 2-7 or 7-12. After the reaction is completed, a neutralizing agent may be added to neutralize the acidic or alkaline catalyst, as necessary.

A surfactant may be added to the aqueous solution in order to disperse the silane compound and a hydrolysis reaction product in water. The surfactant is not limited. For example, anionic surfactants such as an alkyl sulfate, alkyl benzene sulfonate, and alkyl phosphate, nonionic surfactants such as a polyoxyethylene alkyl ether, polyoxyethylene oxypropylene alkyl ether, polyoxyethylene alkyl phenyl ether, and polyoxyethylene fatty acid ester, cationic surfactants such as a quaternary ammonium salt and alkylamine acetate, and amphoteric surfactants such as an alkyl betaine and alkyl imidazoline can be used. These may be used singly or in combination of two or more thereof. A surfactant that exhibits acidity or alkalinity can be used also as a hydrolysis catalyst. The amount of surfactant added is not limited, and is preferably 1 to 50 pbw per 100 pbw of the silane compound. The amount less than 1 pbw fails to exhibit a sufficient effect of addition of the surfactant, and the amount more than 50 pbw has a likelihood of impairing water-repellency of the water-repellent agent.

A hydrolysis catalyst and surfactant may be added to a mixture of water and the silane compound as necessary, and the hydrolysis reaction can be carried out at 0-90°C for 10 minutes to 24 hours. Thereafter, a neutralization reaction can be carried out as necessary, and a silicone resin can be thus obtained. By-products produced in the hydrolysis reaction, such as alcohols and neutralizing salts, can be removed by distillation under reduced pressure or filtration. Various additives can be added to this silicone resin. For example, an antiseptic agent and thickener can be added according to purposes.

### [Amount of each component]

### (Amount of non-fluorine copolymer (A))

The amount of non-fluorine copolymer (A) may be 0.01 wt.% or more, 0.5 wt.% or more, 1 wt.% or more, 3 wt.% or more, 5 wt.% or more, 10 wt.% or more, 20 wt.% or more, or 30 wt.% or more, relative to the dispersion. The amount of non-fluorine copolymer (A) may be 60 wt.% or less, 50 wt.% or less, 40 wt.% or less, 30 wt.% or less, 20 wt.% or less, 10 wt.% or less, 5 wt.% or less, or 3% o by weight or less, relative to the dispersion. For example, a dispersion with a high concentration of non-fluorine copolymer (A) may be stored, and diluted to an arbitrary concentration by adding a liquid medium as necessary upon using as a repellent (water- and oil-repellent agent, water-repellent agent, or oil-repellent agent). Since the product stability is improved, a product having a high concentration, which conventionally had a problem with supply in terms of the stability, can be supplied.

### (Amount of unreacted chloride monomer (a2))

A concentration of unreacted chloride monomer (a2) in the dispersion may be 10.0 ppm or less, 9.0 ppm or less, 8.0 ppm or less, 7.0 ppm or less, 6.0 ppm or less, 5.5 ppm or less, 5.0 ppm or less, 4.5 ppm or less, 4.0 ppm or less, 3.5 ppm or less, 3.0 ppm or less, 2.5 ppm or less, 2.0 ppm or less, 1.5 ppm or less, 1.0 ppm or less, 0.8 ppm or less, 0.5 ppm or less, 0.3 ppm or less, or 0.1 ppm or less.

### (Amount of liquid medium (B))

The amount of liquid medium (B) may be 40 wt.% or more, 50 wt.% or more, 60 wt.% or more, 70 wt.% or more, 80 wt.% or more, 90 wt.% or more, 95 wt.% or more, or 97 wt.% or more, relative to the dispersion. The amount of liquid medium (B) may be 99.9 wt.% or less, 99 wt.% or less, 95 wt.% or less, 90 wt.% or less, 80 wt.% or less, 70 wt.% or less, 60 wt.% or less, or 50 wt.% or less, relative to the dispersion.

### (Amount of water-soluble organic solvent (b1))

The amount of water-soluble organic solvent (b1) may be 0.5 wt.% or more, 1 wt.% or more, 2 wt.% or more, 3 wt.% or more, 5 wt.% or more, 7.5 wt.% or more, 10 wt.% or more, 12.5 wt.% or more, 15 wt.% or more, or 20 wt.% or more, relative to the dispersion. The amount of water-soluble organic solvent (b1) may be 75 wt.% or less, 50 wt.% or less, 40 wt.% or less, 30 wt.% or less, 25 wt.% or less, 20 wt.% or less, 15 wt.% or less, 10 wt.% or less, or 5 wt.% or less, relative to the dispersion.

The amount of water-soluble organic solvent (b1) may be 1 wt.% or more, 3 wt.% or more, 5 wt.% or more, 10 wt.% or more, 20 wt.% or more, 30 wt.% or more, or 40 wt.% or more, relative to liquid medium (B). The amount of water-soluble organic solvent (b1) may be 55 wt.% or less, 45 wt.% or less, 35 wt.% or less, 25 wt.% or less, 15 wt.% or less, 12.5 wt.% or less, 7.5 wt.% or less, or 5.0 wt.% or less, relative to liquid medium (B).

The amount of water-soluble organic solvent (b1) may be 1 pbw or more, 3 pbw or more, 5 pbw or more, 10 pbw or more, 20 pbw or more, 30 pbw or more, 40 pbw or more, or 50 pbw or more, per 100 pbw of non-fluorine copolymer (A). The amount of water-soluble organic solvent (b1) may be 200 pbw or less, 175 pbw or less, 150 pbw or less, 125 pbw or less, 100 pbw or less, 80 pbw or less, 60 pbw or less, 40 pbw or less, 20 pbw or less, or 10 pbw or less, per 100 pbw of non-fluorine copolymer (A).

The amount of water-soluble organic solvent (b1) may be 0.5 pbw or more, 1 pbw or more, 1.5 pbw or more, 3 pbw or more, 5 pbw or more, 10 pbw or more, 15 pbw or more, 20 pbw or more, 30 pbw or more, or 40 pbw or more, per 100 pbw of water. The amount of water-soluble organic solvent (b1) may be 100 pbw or less, 75 pbw or less, 50 pbw or less, 25 pbw or less, 10 pbw or less, or 5 pbw or less, per 100 pbw of water.

### (Amount of water)

The amount of water may be 20 wt.% or more, 30 wt.% or more, 40 wt.% or more, 50 wt.% or more, 60 wt.% or more, 70 wt.% or more, or 80 wt.% or more, relative to liquid medium (B). The amount of water may be 99 wt.% or less, 95 wt.% or less, 90 wt.% or less, 80 wt.% or less, 70 wt.% or less, 60 wt.% or less, or 50 wt.% or less, relative to liquid medium (B).

### (Amount of other solvent)

The amount of other solvent may be 1 wt.% or more, 3 wt.% or more, 5 wt.% or more, 10 wt.% or more, 20 wt.% or more, 30 wt.% or more, or 40 wt.% or more, relative to liquid medium (B). The amount of the other solvent may be 55 wt.% or less, 45 wt.% or less, 35 wt.% or less, 25 wt.% or less, 15 wt.% or less, 12.5 wt.% or less, 7.5 wt.% or less, or 5.0 wt.% or less, relative to liquid medium (B). The dispersion may be free of the other solvent.

### (Amount of surfactant)

The amount of surfactant may be 0.1 pbw or more, 1 pbw, 3 pbw or more, 5 pbw or more, 10 pbw or more, 15 pbw or more, or 20 pbw or more, per 100 pbw of non-fluorine copolymer (A). The amount of surfactant may be 50 pbw or less, 40 pbw or less, 30 pbw or less, 20 pbw or less, 10 pbw or less, or 5 pbw or less, per 100 pbw of non-fluorine copolymer (A). A dispersion of non-fluorine copolymer (A) (self-emulsifying type dispersion) may be formed without using the surfactant.

### (Amount of curing agent)

The amount of curing agent may be 0.1 pbw or more, 1 pbw or more, 3 pbw or more, 5 pbw or more, 10 pbw or more, 15 pbw or more, or 20 pbw or more, per 100 pbw of non-fluorine copolymer (A). The amount of curing agent may be 50 pbw or less, 40 pbw or less, 30 pbw or less, 20 pbw or less, 10 pbw or less, or 5 pbw or less, per 100 pbw of non-fluorine copolymer (A).

### (Amount of other components)

The amount of the other components may be 0.1 pbw or more, 1 pbw or more, 3 pbw or more, 5 pbw or more, 10 pbw or more, 15 pbw or more, or 20 pbw or more, per 100 pbw of non-fluorine copolymer (A). The amount of the other components may be 50 pbw or less, 40 pbw or less, 30 pbw or less, 20 pbw or less, 10 pbw or less, or 5 pbw or less, per 100 pbw of non-fluorine copolymer (A).

The amount of each component in the dispersion may be the same as the amount of each component in a polymerization stage in production of the dispersion.

### <Production method of dispersion>

The method for producing a dispersion in the present disclosure comprises
(i) copolymerizing a hydrophobic monomer (a1) and at least one chloride monomer (a2) selected from vinyl chloride and vinylidene chloride in a polymerization solvent to obtain a polymer solution containing a non-fluorine copolymer (A), and
(ii) reducing a concentration of the unreacted chloride monomer (a2) in the obtained polymer solution to 10.0 ppm or less,
wherein
the polymerization solvent contains a water-soluble organic solvent (b1), or the water-soluble organic solvent (b1) is added to the polymer solution.

### [Step (i) of obtaining a polymer solution containing non-fluorine copolymer (A)]

Non-fluorine copolymer (A) in the present disclosure can be produced by any of ordinary polymerization methods, and conditions of the polymerization reaction can be also arbitrarily selected. Examples of such polymerization methods include emulsion polymerization, solution polymerization, and suspension polymerization. Non-fluorine copolymer (A) is preferably produced by emulsion polymerization or solution polymerization, and particularly by emulsion polymerization. A polymerization solvent in the polymerization reaction contains water-soluble organic solvent (b1), or water-soluble organic solvent (b1) is added to the polymer solution after polymerization. The polymerization solvent preferably contains water-soluble organic solvent (b1). Containing water-soluble organic solvent (b1) enables improvements in emulsifiability and copolymerizability of the dispersion. Water-soluble organic solvent (b1) is preferably contained also in view of liquid repellent performance. The amount of each component in the dispersion may be the same as the amount of each component in a polymerization solvent in the polymerization step. The amount of each component in the polymerization step and the amount of each component in the above dispersion may be the same.

### (Emulsion polymerization)

For emulsion polymerization, a method may be employed that includes emulsifying monomers into a polymerization solvent in the presence of a polymerization initiator and a surfactant if necessary, and polymerizing the monomers, after nitrogen purge, under stirring for 30 minutes to 48 hours, for example 3-24 hours, in the range of 50-80°C. The polymerization solvent preferably contains water-soluble organic solvent (b1). Examples of the polymerization initiator to be used include water-soluble initiators such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine dihydrochloride, azobisisobutyronitrile, sodium peroxide, potassium persulfate, and ammonium persulfate, and oil-soluble initiators such as azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator may be 0.01 pbw or more, 0.1 pbw or more, or 1 pbw or more, and 20 pbw or less, 10 pbw or less, or 5 pbw or less, per 100 pbw of monomer.

For obtaining a dispersion excellent in the stability when left stand, it is desirable that the monomers be micronized into fine particles in water by using an emulsification apparatus that can impart powerful pulverizing energy, such as a high-pressure homogenizer or ultrasonic homogenizer, and then polymerized. Various anionic, cationic, or nonionic surfactants can be used as the surfactant, and the surfactant may be used in an amount in the range of 0.5-20 pbw per 100 pbw of monomers. The anionic and/or nonionic and/or cationic surfactants are preferably used.

### (Solution Polymerization)

In solution polymerization, a method may be employed that includes dissolving a monomer in a polymerization solvent in the presence of a polymerization initiator, followed by nitrogen purge, and then heating and stirring the mixture at 30-120°C for 30 minutes to 48 hours, for example, 3-24 hours. Examples of the polymerization initiator include azobisisobutyronitrile, benzoyl peroxide, di-t-butyl peroxide, lauryl peroxide, cumene hydroperoxide, t-butyl peroxypivalate, and diisopropyl peroxydicarbonate. The amount of polymerization initiator may be 0.01 pbw or more, 0.1 pbw or more, or 1 pbw or more, and 20 pbw or less, 10 pbw or less, or 5 pbw or less, per 100 pbw of the monomer.

The polymerization solvent may be a solvent that is inactive to monomers and used for dissolving them, and for example, it may be esters (for example, C₂₋₃₀-esters, specifically ethyl acetate and butyl acetate), ketones (for example, C₂₋₃₀-ketones, specifically methyl ethyl ketone and diisobutyl ketone), alcohols (for example, C₁₋₃₀-alcohols, specifically isopropyl alcohol), ethers, alkanes, toluene-based solvents, and halogenated carbon. Specific examples of the polymerization solvent include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane, trichlorotrifluoroethane, and mixed solvents thereof. The polymerization solvent may contain water-soluble organic solvent (b1). The amount of the polymerization solvent may be 30 pbw or more, 50 pbw or more, 100 pbw or more, 200 pbw or more, or 300 pbw or more, and may be 2,000 pbw or less, 1,500 pbw or less, 1,000 pbw or less, 750 pbw or less, or 500 pbw or less, per 100 pbw of the total monomers.

### (Others)

A chain transfer agent may be used in the polymerization. The molecular weight of the polymer can be changed according to the amount of the chain transfer agent used. Examples of the chain transfer agent include mercaptan group-containing compounds such as lauryl mercaptan, thioglycol, and thioglycerol (in particular alkyl mercaptan (for example, having 1-30 carbon atoms)), and inorganic salts such as sodium hypophosphite and sodium hydrogen sulfite. The amount of the chain transfer agent used may be in the range of 0.01-10 part by weight, for example, 0.1-5 pbw, relative to 100 pbw of the total amount of the monomers.

To the polymer solution may be added solvents (water, water-soluble organic solvent (b2), and the others), after producing non-fluorine copolymer (A). For example, monomers can be polymerized in the presence of an organic solvent to produce non-fluorine copolymer (A), and water can be then added to the polymer mixture, followed by distilling off the organic solvent, if necessary. A surfactant may be added before or after polymerization, or may not be added. An aqueous dispersion can still be obtained without the addition of the surfactant, by self-emulsifying of the polymer in water. A curing agent may be added before or after polymerization, and is preferably added after polymerization. Other components may be added before or after polymerization.

### [Chloride monomer removal step (ii)]

Examples of a method for removing unreacted vinyl chloride or vinylidene chloride from the polymer solution after a polymerization reaction, include distillation under a reduced pressure, distillation by stirring under normal pressure and heating, distillation by bubbling of air, nitrogen or steam under heating or non-heating (for example, at 100 cc/min or more, 200 cc/min or more, 300 cc/min or more, or 400 cc/min or more, for 3 hours or longer, 6 hours or longer, 12 hours or longer, or 18 hours or longer), and a method involving utilizing a packed column, spin coater, and cylindrical volatilizing equipment. The temperature, time, air flow intensity, upon the removal step can be appropriately changed. Chloride monomer (a2) may be removed such that at least part of the liquid medium remains in the polymer solution.

### <Applications of dispersion>

Examples of applications of the dispersion in the present disclosure include an external treatment agent (surface-treating agent) or internal treatment agent, repellent (water-repellent agent, oil-repellent agent or water- and oil-repellent agent), soil resistant agent, soil release agent, release agent, and mold release agent (external mold release agent or internal mold release agent).

### <Production method of treated product>

The method for producing a treated product in the present disclosure includes the step of applying the dispersion to a substrate.

### [Treated product]

Examples of the substrate treated with the dispersion of the present disclosure (for example, the surface-treating agent, the water repellent agent, oil repellent agent, or water- and oil-repellent agent) include textile products, stone, filters (for example, electrostatic filters), dust masks, components of fuel cells (for example, gas diffusion electrodes and gas diffusion supports), glass, paper, wood, leather, fur, asbestos, brick, cement, metals and oxides, ceramic products, plastics, painted surfaces, and plasters. Examples of the textile products include various products, including animal and vegetable natural fibers such as cotton, hemp, wool, and silk; synthetic fibers such as polyamide, polyester, polyvinyl alcohol, polyacrylonitrile, polyvinyl chloride, and polypropylene; semi-synthetic fibers such as rayon and acetate; inorganic fibers such as glass fiber, carbon fiber, and asbestos fiber; or mixed fibers thereof. As an example of a substrate to be treated with the dispersion, a woven or knitted fabric will be described in detail.

### (Woven or knitted fabric)

### • Production method of woven or knitted fabric

A woven or knitted fabric can be obtained by weaving or knitting the aforementioned combined filament-interlaced yarns to obtain a greige fabric and then subjecting it to post-processing and water-repellent treatment. The weaving or knitting may be carried out by using a known weaving machine or knitting machine, and the preparation process prior to weaving or knitting can also be carried out by using known equipment.

In the post-processing, the greige fabric first undergoes scouring and relaxing. The scouring and relaxing may be carried out continuously or in a batch manner at a temperature of 80-130°C. The scouring and relaxing are usually preferably carried out in a batch manner at 100°C or lower, and in particular, it is preferably carried out by using a highpressure liquid flow dyeing machine equipped with a jet nozzle.

After the scouring and relaxing, the woven or knitted fabric undergoes presetting. The presetting is usually carried out by dry heat treatment at 170-200°C for 30-120 seconds by using a pin tenter. After the presetting, the fabric is dyed according to an ordinary method, followed by final setting if necessary.

After the post-processing, the woven or knitted fabric may undergo water-repellent treatment. In the water-repellent treatment, first, an aqueous solution containing a water-repellent agent (the aqueous solution may be the dispersion in the present disclosure) is prepared. Then, by e.g. a padding method, spray method, kiss roll coater method, or slit coater method, the aforementioned aqueous solution can be applied to the woven or knitted fabric after the above post-processing, and the resultant may undergo dry heat treatment at 105-190°C for 30-150 seconds. The above aqueous solution may contain a crosslinking agent, softener, antistatic agent, and the others, as necessary. After the water-repellent treatment, the woven or knitted fabric may be subjected to calendering processing in order to further improve its water-repellent performance.

The woven or knitted fabrics are suitably used for apparel applications, particularly for uniform wear applications, ladies' wear applications, and sportswear applications.

### • Stacked fabric

The woven or knitted fabric of the present disclosure may be provided in the form of a stacked fabric having a moisture permeable and waterproof layer on one side of the woven or knitted fabric. The moisture permeable and waterproof layer may be stacked directly on the woven or knitted fabric, or it may be stacked above the woven or knitted fabric via an adhesive layer. When the stacked fabric of the present disclosure is used for e.g. apparel applications, it is arranged so that the woven or knitted fabric side is exposed to e.g. rainwater.

### • Moisture permeable and waterproof layer

The moisture permeable and waterproof layer is a layer that covers one side of the woven or knitted fabric and is formed by a resin having a waterproof property and moisture permeability.

The moisture permeable and waterproof layer may be formed by directly coating a woven or knitted fabric with a resin (resin for forming the moisture permeable and waterproof layer) or the layer may be stacked above one side of the woven or knitted fabric via the adhesive layer described below. In the present disclosure, combined filament-interlaced yarns with fine protrusions due to loops or slacks are used for the woven or knitted fabric. Therefore, the protrusions are firmly entangled with the adhesive layer or the moisture permeable and waterproof layer to exhibit an anchoring effect, so that it is very difficult for the woven or knitted fabric and the moisture permeable and waterproof layer to peel from each other. In a case in which an ordinary woven or knitted fabric (a woven or knitted fabric in which the aforementioned protrusions are not sufficiently retained on its surface) is used, the anchoring effect may not be sufficiently exhibited, whereby the woven or knitted fabric and the moisture permeable and waterproof layer easily peel from each other.

A resin for forming the moisture permeable and waterproof layer is not limited, and preferably contains a polyurethane resin as the main component, and for example, the resin preferably contains a polyurethane resin in an amount of 80% by mass or more. The polyurethane resin is generally suitable for forming a resin layer with moisture permeability and a waterproof property. Among them, a microporous type of polyurethane is preferred, taking moisture permeability into consideration. However, in a case in which the resin is likely to be exposed to rainfall for a long period of time or is expected to be used repeatedly via laundry, a non-porous type of moisture permeable urethane may be used instead of the microporous type.

As the polyurethane resin, a conventionally known polyurethane resin obtained by reacting a polyisocyanate component with a polyol component can be employed.

The moisture permeable and waterproof layer may have a microporous structure or a non-porous structure. In the case of the microporous structure, inorganic fine powder can be contained in the moisture permeable and waterproof layer in order to secure desired moisture permeability.

Examples of the inorganic fine powder include fine powder made of, for example, silicon dioxide, aluminum dioxide, or titanium dioxide. The average primary particle size of the inorganic fine powder is preferably about 7-40 nm. The content of inorganic fine powder is preferably 3-50 mass% relative to the total amount of moisture permeable and waterproof layer, and it is preferably 5-50 mass%.

The thickness of the moisture permeable and waterproof layer is preferably 5 µm or thicker and more preferably 10 to 30 µm. Within the above range of thickness, a waterproof property and moisture permeability are well-balanced, which is advantageous in terms of texture and tear strength.

### • Adhesive layer

The stacked fabric preferably includes an adhesive layer. In other words, the woven or knitted fabric and the moisture permeable and waterproof layer are preferably stacked via an adhesive layer. The reason therefor will be described below. In the present disclosure, the woven or knitted fabric is employed that has on its surface fine protrusions due to loops or slacks, as described above. Therefore, the protrusions are firmly entangled with the adhesive layer to exhibit an anchoring effect, so that it is very difficult for the woven or knitted fabric and the moisture permeable and waterproof layer to peel from each other.

Moreover, when the moisture permeable and waterproof layer is directly stacked on the aforementioned woven or knitted fabric, for example, by a coating method, the protrusions on the surface of the woven or knitted fabric may penetrate thorough the moisture permeable and waterproof layer, which results in formation of pinholes and may thus cause poor water resistance and strength. There also arises a concern that coating will not be carried out in uniform manner, resulting in uneven thickness in the moisture permeable and waterproof layer. In order to prevent this, when a surface of the woven or knitted fabric is smoothed by a calendering processing, for example, water-repellency may decrease due to reduction in the protrusions or air retention layer. Therefore, in order to achieve an excellent balance of water-repellency, strength, and water resistance in the present disclosure, the woven or knitted fabric and the moisture permeable and waterproof layer are preferably stacked via an adhesive layer.

A type of the adhesive for forming the adhesive layer is not limited, but is preferably an adhesive excellent in miscibility with the moisture permeable and waterproof layer. For example, when a resin including a polyurethane resin as the main component is selected as a resin for forming the moisture permeable and waterproof layer, an adhesive layer composed of a polyurethane-based adhesive is preferably employed. The polyurethane-based adhesive used may be any one of etheric, esteric, polycarbonate-based adhesives, and the others; however, in view of imparting excellent moisture permeability, the etheric adhesive is preferably included.

The adhesive layer may be formed on the entire surface of one side of the woven or knitted fabric, or may be formed in pattern in view of e.g. moisture permeability or texture. The patterned form is not limited, and may be dotted, linear, lattice, checkered, tortoiseshell patterns, and the others, and any of these patterns is preferably uniformly distributed throughout the entire surface.

The thickness of the adhesive layer is preferably about 10-100 µm and more preferably 20-80 µm. The thickness less than 10 µm makes it difficult to provide a durable stacked fabric even when the area occupied by the adhesive is large, and the thickness exceeding 100 µm increases a production cost and also leads to a tendency that further adhesiveness cannot be expected, both of which are undesirable.

### • Textile fabric for lining

In the stacked fabric of the present disclosure, a textile fabric for lining may be stacked on the moisture permeable and waterproof layer (the side of the moisture permeable and waterproof layer opposite from the side thereof on which the woven or knitted fabric of the present disclosure is stacked). The moisture permeable and waterproof layer can be protected by the textile fabric for lining, thereby rendering the layer further excellent in waterproof properties (water pressure resistance) and strength. Moreover, stacking the textile fabric for lining can inhibit elongation of the entire stacked fabric. Therefore, the protrusions can be inhibited from their reduction resulting from a pull on the protrusions of the combined filament composite yarns by elongation of the woven or knitted fabric due to e.g. a finishing process after stacking or tension upon wearing, and the aforementioned water-repellency can be highly maintained. Moreover, stacking the textile fabric for lining further improves the water-repellency. The reason for this is not clarified; however, the present inventors conjecture that the thermal history of the water-repellent agent, which is increased by the additional stacking step, further improves water-repellency.

Examples of textile fabrics for lining include various types of woven fabrics and knitted fabrics. Among these, knitted fabrics are more suitable than woven fabrics because fiber yarns constituting the knitted fabrics easily protrude from their surfaces to create a less flat surface condition, and thus, the anchoring effect is more exhibited, thereby making it difficult for the fabric to peel from the moisture permeable and waterproof layer. In particular, a tricot knitted fabric, elasticity of which is inhibited compared to knitted fabrics having other structures, is preferred, because their stitch voids become not too large, allowing the water-repellency to be exhibited more effectively. The tricot knitted fabric is also preferred for the following reason: a long greige tricot knitted fabric with fewer joints can be obtained upon knitting, which makes it possible for the fabric to be uniformly stacked on the moisture permeable and waterproof layer.

A material of fibers constituting the textile fabric for lining is not limited and can be appropriately selected; however, it is preferably a nylon fiber. The reason for this is, for example, a problem with polyester fibers, for which disperse dyes are used, is migration and sublimation of the disperse dyes to the moisture permeable and waterproof layer, and acid dyes are generally used for nylon fibers, thereby hardly causing such a problem. The form (long fiber, staple fiber, or spun yarn) of the constituent fiber of the textile fabric for lining, or fineness thereof is not limited, and can be appropriately selected such that the effect of the present disclosure is not impaired.

### • Characteristics of stacked fabric

The stacked fabric has an excellent waterproof property. As for a suitable example of the waterproof property of the stacked fabric of the present disclosure, the water level is, for example, 10,000 mm or more, preferably 15,000 mm or more, further preferably 16,000 mm or more, and particularly preferably 20,000 mm or more, as measured according to the water resistance test specified in the A method (low water pressure method) in JIS L 1092: 2009. The upper limit value of the water level is not limited, and is, for example, 50,000 mm or 25,000 mm.

The stacked fabric has excellent moisture permeability. As for a suitable example of the moisture permeability of the stacked fabric of the present disclosure, the moisture permeability is, for example, 10,000 g/m²·24h or more, preferably 15,000 g/m²·24h or more, and further preferably 20,000 g/m²·24h or more, as measured according to the B-1 method (potassium acetate method) in JIS L 1099: 2012. The upper limit value of the moisture permeability is not limited, and is, for example, 40,000 g/m²·24h or 35,000 g/m²·24h.

The stacked fabric inhibits interlayer peeling between the woven or knitted fabric and the moisture permeable and waterproof layer. As for a suitable example of the peel strength between the woven or knitted fabric and the moisture permeable and waterproof layer in the stacked fabric of the present disclosure, the peel strength is, for example, 5 N/2.54 cm or more, preferably 5-50 N/2.54 cm, further preferably 6-30 N/2.54 cm, and particularly preferably 9-25 N/2.54 cm, as measured according to the method in JIS L 1089. In order to fall the peel strength in the above range, a woven or knitted fabric without calendering processing may be employed, or an adhesive layer may be provided, for example.

### • Production method of stacked fabric

Methods for producing a stacked fabric are not limited, but include for example, the first production method and second production method described below.

The first production method: it comprises the step of applying a resin for the moisture permeable and waterproof layer to the surface of a woven or knitted fabric to form the moisture permeable and waterproof layer.

The second production method: it comprises the step of forming an adhesive layer on a woven or knitted fabric or a moisture permeable and waterproof layer, and the step of bonding the woven or knitted fabric and the moisture permeable and waterproof layer via an adhesive layer.

The woven or knitted fabric used for stacked fabrics (i.e., the woven or knitted fabrics of the present disclosure described above) preferably retain protrusions on the fabric surface as much as possible. For example, when a woven or knitted fabric undergoes calendering processing in order to e.g. facilitate coating processing, fine protrusions of combined filament-interlaced yarns may be crushed to a flat surface, whereby a specific water drop rolling angle may not be achieved. Furthermore, as a result of the calendering processing, the above-described air retention layer cannot be sufficiently retained, whereby the desired water-repellency may not be attained. Therefore, conditions for calendering processing are preferably sufficiently taken into account, and for example, when a woven or knitted fabric is subjected to calendering processing, ordinary conditions (for example, a temperature of 130°C or higher, and a linear pressure of 200-20,000 N/cm) may be employed so that the protrusions of the combined filament-interlaced yarns are not reduced too much. Calendering processing may also be carried out without heating.

In the first production method, examples of methods for applying a resin for the moisture permeable and waterproof layer to the surface of the woven or knitted fabric include a coating method. In the coating method, a knife coater or comma coater can be used. In view of allowing a moisture permeable and waterproof layer to have excellent moisture permeability, it is preferably obtained by a wet method.

In the second production method, examples of methods for forming an adhesive layer on a woven or knitted fabric or a moisture permeable and waterproof layer include a lamination method. In the lamination method, a method involving use of a resin solution or a method involving hot melt can be employed to form the adhesive layer. First, a clearance is created on the surface of a release material (e.g. release paper, release fabric, or release film); a resin composition for forming a moisture permeable and waterproof layer (for example, a resin composition containing a resin and an organic solvent) is applied thereto while adjusting its thickness, to form a moisture permeable and waterproof layer; and the moisture permeable and waterproof layer is heat treated to completely react to thereby obtain a film. The release material can be appropriately removed after having bonded or aging.

An adhesive layer is then formed on the woven or knitted fabric or the moisture permeable and waterproof layer. For example, in the method involving use of a resin solution, a polyurethane resin solution may be applied to the entire surface of the layer or applied to the surface in a pattern, and the polyurethane resin solution may be a two-pack curable type and have an adjusted viscosity within a range of 500-5000 mPa·s. Thereafter, the applied solution is then dried to form the adhesive layer, the woven or knitted fabric and the moisture permeable and waterproof layer are bonded to each other via the adhesive layer, and undergo compression bonding or thermal compression bonding, whereby the second production method can be implemented.

In the case of hot melt, on the other hand, a moisture-curable resin, which reacts with moisture in the air, is preferably used, and those that melt in a temperature range of about 80-150°C are more suitably used in practice. In this case, the hot melt resin is first melted while taking into consideration the melting point of the resin, its viscosity when melted and the others. The surface of the woven or knitted fabric or the moisture permeable and waterproof layer is then coated with the molten resin, and the coated fabric or layer is allowed to mature while cooled at ordinary temperature to form an adhesive layer. Thereafter, the woven or knitted fabric and the moisture permeable and waterproof layer are bonded to each other via the adhesive layer, and undergo compression bonding, whereby the second production method can be implemented.

Among these production methods, the second production method is preferably employed. This is because, in a case in which the moisture permeable and waterproof layer is stacked using the coating method, there is a concern that the moisture permeable and waterproof layer may create pinholes due to fine protrusions on the surface of the woven or knitted fabric, which tends to reduce water resistance pressure. Moreover, when the woven or knitted fabric is subjected to calendering processing in an attempt to form a uniform moisture permeable and waterproof layer, there is a concern that desired water-repellency may not be achieved due to reduction of the protrusions or air retention layer, and calendering conditions are thus required to be examined separately, which may result in that the process itself may become complicated.

Thereafter, the textile fabric for lining can be stacked on the moisture permeable and waterproof layer using a known and appropriate method.

### • Applications of stacked fabric

The stacked fabric has excellent water-repellency, and moisture permeability and a waterproof property, and the moisture permeable and waterproof layer does not peel off even in harsh environments. Accordingly, the stacked fabric is suitable in the fields such as uniform clothing, sportswear clothing, and outdoor products, all of which are used outdoors.

### [Treatment method]

The dispersion of the present disclosure can be applied as a treatment agent (particularly a surface-treating agent) to a substrate by conventionally known methods. A method for applying the dispersion of the present disclosure may include dispersing the dispersion in an organic solvent or water to dilute it therewith, if necessary, and allowing the resulting dispersion to adhere to the surface of the substrate by any known methods such as dip coating, spray coating, and foam coating, and then drying it. If necessary, a suitable crosslinking agent may be applied in combination with the dispersion, followed by curing. Furthermore, the dispersion of the present disclosure may be used in combination with various additives such as water- and/or oil-repellent agents, anti-slip agents, antistatic agents, texture modifiers, softening agents, antibacterial agents, flame retarders, coating material fixing agents, wrinkle-resistant agents, drying rate adjusters, crosslinking agents, film formation agents, compatibilizing agents, antifreeze agents, viscosity adjusters, ultraviolet absorbers, antioxidants, pH adjusters, insect repellents, and antifoaming agents. Examples of the various additives may be the same as those described in "Other components" for the dispersion hereinabove. The concentration of the non-fluorine copolymer in the treatment agent to be brought into contact with a substrate may be appropriately changed according to applications, but may be 0.01-10 wt.%, for example, 0.05-5 wt.%.

### [Textile product]

A textile product as a substrate may be any of various products, and examples thereof include fabric products and paper products.

Examples of the fabric product include: flora and fauna natural fibers such as cotton, hemp, wool, and silk; synthetic fibers such as a polyamide, polyester, polyvinyl alcohol, polyacrylonitrile, polyvinyl chloride, and polypropylene; semisynthetic fibers such as rayon and acetate; inorganic fibers such as a glass fiber, carbon fiber, and asbestos fiber or a mixture of these fibers. Fabric products include woven fabrics, knitted fabrics, and non-woven fabrics, fabrics in clothing form and carpets. Fibers, yarns and intermediate textile products (for example, slivers or coarse yarns) before being formed into fabrics may also undergo treatments.

Examples of the paper product include: papers made of bleached or unbleached chemical pulps such as kraft pulp or sulfite pulp; bleached or unbleached high-yield pulps such as crushed wood pulp, mechanical pulp, or thermomechanical pulp; waste paper pulps such as waste newspaper, waste magazines, waste cardboards, or deinked waste paper; containers made of paper, and formed articles made of paper. Specific examples of the paper product include food packaging paper, base paper for gypsum board, coated base paper, medium quality paper, general liner and core, neutral pure white roll paper, neutral liner, rust-proof liner and metal joined paper, kraft paper, neutral printing and writing paper, neutral coated base paper, neutral PPC paper, neutral thermal paper, neutral pressure sensitive base paper, neutral inkjet paper and neutral information paper, and molded paper (molded containers).

The dispersion can be applied to the textile products by any of the methods known for treating textile products (for example, fabrics) with liquids. The textile product may be immersed in a dispersion, or the solution may be adhered to or sprayed on the textile product. The treated textile product is dried and subjected to curing, preferably by heating, in order to develop water- and oil-repellency. The heating temperature may be, for example, 100-200°C, 100-170°C, or 100-120°C. Favorable performance can be obtained even by heating at lowered temperatures (for example, 100-140°C) in the present disclosure. In the present disclosure, the heating time may be 5 seconds to 60 minutes, for example, 30 seconds to 3 minutes.

Alternatively, the polymer may be applied to the textile product by a cleaning method, for example, in laundry application or dry cleaning methods.

The textile products to be treated may be fabrics, including woven textiles (woven fabrics), knitted textiles (knitted fabrics) and nonwoven fabrics, fabrics in clothing form and carpets. The textile products may also be fibers or yarns or intermediate textile products (for example, sliver or coarse yarn). The dispersion of the present disclosure is particularly effective in rendering textile products (for example, synthetic fibers) water- and/or oil-repellent.

Fibers constituting the textile product may be natural, synthetic, semi-synthetic, regenerated or inorganic fibers. Fibers may be used singly or in combination of two or more thereof.

Examples of the natural fibers include cellulosic fibers such as cotton, flax, and pulp, chitin, chitosan, wool, and silk. Specific examples of the wood pulp include mechanical pulp such as ground wood pulp (GP), pressurized ground wood pulp (PGW), and thermomechanical pulp (TMP), chemical pulp such as high-yield softwood unbleached kraft pulp (HNKP; N material), softwood bleached kraft pulp (NBKP; N material, NB material), hardwood unbleached kraft pulp (LUKP; L material), hardwood bleached kraft pulp (LBKP, L material), waste paper pulp such as deinking pulp (DIP) and waste pulp (WP), and semi-chemical pulp (CP).

Examples of the synthetic fibers include polyesters such as polyethylene terephthalate, polybutylene terephthalate, polytrimethylene terephthalate, and copolymerized polyesters; polyolefins such as linear low density polyethylene, low density polyethylene, high density polyethylene, and polypropylene; polyamides such as nylon 6, nylon 66, nylon 610, and nylon 46; and acrylic fibers such as polyacrylonitrile; polyvinyl alcohol, polyurethane, and polyvinyl chloride.

Examples of the semi-synthetic fibers include acetate and triacetate. Examples of the regenerated fibers include rayon, cupra, polynosic rayon, lyocell, and tencel. Examples of inorganic fibers are a glass fiber and carbon fiber.

Alternatively, the textile product may be leather. In order to render the leather water- and oil-repellent, the polymeric product in the form of an aqueous solution or aqueous emulsion may be applied to the leather at various stages of leather processing, for example, during a wet processing of the leather or during a finishing of the leather.

Alternatively, the textile product may be paper. The polymeric product may be applied to paper that has been produced, or may be applied at various stages of papermaking, for example, during drying the paper.

The term "treatment" means applying the dispersion to a substrate by e.g. dipping, spraying and coating. The treatment allows the polymer as an active ingredient of the dispersion to penetrate inside of the substrate and/or to adhere to a front side of the substrate.

### [Pretreatment of textile product]

The textile product may be pretreated prior to treatment with the dispersion of the present disclosure. When a pretreated textile product is treated with the dispersion, the textile product after the treatment with the dispersion has excellent fastness.

Examples of pretreatment of textile products include cationization treatments by reaction with e.g. reactive quaternary ammonium salts, anionization treatments such as sulfonation, carboxylation and phosphorylation, acetylation treatment after anionization treatment, benzoylation treatment, carboxymethylation treatment, grafting treatment, tannin acid treatment, and polymer coating treatment.

The method for pretreating the textile product is not limited, and the textile product can be pretreated by any of conventionally known methods. The method for pretreatment may include dispersing a pretreatment liquid in an organic solvent or water to dilute it therewith, as necessary, and allowing the diluted pretreatment liquid to adhere to the surface of the textile product by any known methods such as dip coating, spray coating, and foam coating, and then drying the resultant. The pH and temperature of the pretreatment liquid may be adjusted according to an extent of treatment desired. As an example of the method for pretreating a textile product, a method for pretreating the textile product with a non-fluorine water-repellent agent will be described in detail.

### (Pretreatment of textile product with non-fluorine water-repellent agent)

A method for producing a pretreated textile product may include the step of applying at least one non-fluorine water-repellent agent selected from an acrylic water-repellent agent, silicone-based water-repellent agent and dendrimer-based water-repellent agent, to a fiber containing at least one functional group (hereinafter may be referred to as "specific functional group") selected from a monovalent group represented by -SO₃M¹ wherein M¹ represents a monovalent cation, a monovalent group represented by -COOM² wherein M² represents a monovalent cation, and a monovalent group represented by - O-P(O)(OX¹)(OX²) wherein X¹ and X² each independently represent H or C₁₋₂₂-alkyl.

Examples of M¹ include H, K, Na, or an ammonium ion which may have a substituent. Examples of M² include H, K, Na, or an ammonium ion which may have a substituent. When X¹ or X² is an alkyl group, preferably C₁₋₂₂-alkyl and more preferably C₄₋₁₂-.

Fibers containing the aforementioned specific functional groups (hereinafter, also referred to as "functional group-containing fibers") can be prepared, for example, by the following methods.
(i) A compound having the above specific functional group is allowed to adhere to a fiber material. The adhesion of the compound may be in a condition such that a portion of the compound and a portion of the fibers are chemically bonded as long as the above specific functional groups remain in a sufficient amount.
(ii) A fiber is provided in which the above specific functional group has been directly introduced into the material forming the fiber.

In the case of (i), for example, a functional group-containing fiber can be obtained by treating the fiber material with a pretreatment liquid containing one or more compounds having the above specific functional group, namely, by the step of introducing the functional group.

Raw materials of the fiber material are not limited, and examples thereof include natural fibers such as cotton, hemp, silk, and wool, semi-synthetic fibers such as rayon and acetate, synthetic fibers such as polyamides (e.g. nylon), polyester, polyurethane, polypropylene, and composite fibers and blended fibers thereof. The fiber material may be in any form of e.g. fibers (e.g. tows and slivers), yarns, knitted fabrics (including interknitted fabrics), woven fabrics (including interwoven fabrics), nonwoven fabrics, and papers.

In the present embodiment, in view of favorable water-repellency of the textile products to be obtained, fiber materials containing a polyamide and polyester as a raw material are preferably used, and in particular, nylons such as nylon 6 and nylon 6,6, polyesters such as polyethylene terephthalate (PET), polytrimethyl terephthalate, and polylactic acid, and mixed fibers containing these materials are preferably used.

A Phenolic polymer can be used as the compound having - SO₃M¹ described above. Examples of such a phenolic polymer include those containing at least one compound represented by the following general formula: 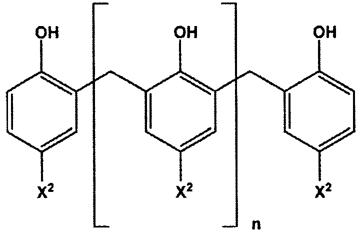 wherein X² represents -SO₃M³, wherein M³ represents a monovalent cation, or a group represented by the following general formula, and n is an integer of 20-3,000; 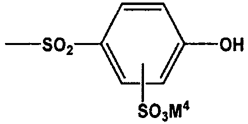 wherein M⁴ represents a monovalent cation.

Examples of M³ includes H, K, Na or an ammonium ion that may have a substituent.

Examples of M⁴ includes H, K, Na or an ammonium ion which may have a substituent.

The compounds represented by the general formula above may be, for example, formalin condensates of phenol sulfonic acid and formalin condensates of sulfonated bisphenol S.

Examples of the compound having -COOM² above include a polycarboxylic acid-based polymer.

The polycarboxylic acid-based polymer used can be, for example, a polymer synthesized by using acrylic acid, methacrylic acid, and maleic acid, as monomers by a conventionally known radical polymerization method, or a commercially available polymer.

A method for producing the polycarboxylic acid-based polymers may include, for example, adding a radical polymerization initiator to an aqueous solution of the aforementioned monomer and/or salt thereof and heating and reacting the mixture at 30-150°C for 2-5 hours. In this case, alcohols such as methanol, ethanol, and isopropyl alcohol, or aqueous solvents such as acetone may be added to the aqueous solution of the above monomer and/or salt thereof. Examples of the radical polymerization initiator include persulfates such as potassium persulfate, sodium persulfate, and ammonium persulfate; redox-based polymerization initiators such as a combination of a persulfate with sodium bisulfite; hydrogen peroxide, and water-soluble azo-based polymerization initiators. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl monomers such as ethylene, vinyl chloride, and vinyl acetate, acrylamide, acrylates, and methacrylates. The acrylates and methacrylates preferably have a hydrocarbon group having 1 to 3 carbon atoms that may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, and propyl methacrylate. These copolymerizable monomers may be used singly or in combination of two or more thereof.

The carboxyl group in the polycarboxylic acid-based polymer may be free or neutralized with an alkali metal, an amine-based compound, or the others. Examples of the alkali metal include sodium, potassium, and lithium, and examples of the amine-based compound include ammonia, monoethanolamine, diethanolamine, and triethanolamine.

A weight average molecular weight of the polycarboxylic acid-based polymer is preferably 1,000-20,000 and more preferably 3,000-15,000 in view of favorable water-repellency of the textile product to be obtained.

Commercially available products of the polycarboxylic acid-based polymer can be used, including "NEOCRYSTAL 770" (trade name, manufactured by NICCA CHEMICAL CO., LTD.) and "CELLOPOL PC-300" (trade name, manufactured by Sanyo Chemical Industries, Ltd.).

Examples of the compound having -O-P(O)(OX¹)(OX²) as described above include phosphate ester compounds represented by the following general formula: 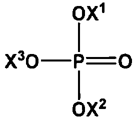 wherein, X¹ or X² is the same as defined above, and X³ represents C₁₋₂₂-alkyl.

As the aforementioned phosphoric acid ester compound, phosphoric acid monoesters, diesters and triesters, and mixtures thereof can be used in which the alkyl ester moiety is C₁₋₂₂-alkyl.

In view of favorable water-repellency of the textile products to be obtained, lauryl phosphoric acid ester and decyl phosphoric acid ester are preferably used.

As the phosphoric acid ester compound, commercially available products such as PHOSPHANOL ML-200 (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396-397 of Seni Sensyoku Kako Jiten (in Japanese; Fiber-dyeing process dictionary) (published by THE NIKKAN KOGYO SHIMBUN, LTD., 1963) and pages 256-260 of Irozome Kagaku (in Japanese; dyeing chemistry) III (published by JIKKYO SHUPPAN CO., LTD., 1975). Examples of the coating treatment include the method involving using a coating machine as described on pages 473-477 of Sensyoku Shiage Kiki Soran (in Japanese; Comprehensive guide to dyeing and finishing machines) (published by SEN-I SHA CO., LTD., 1981). Examples of the dip treatment include the method involving using a batch type dyeing machine as described in pages 196-247 of Sensyoku Shiage Kiki Soran (in Japanese) (published by SEN-I SHA CO.,LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The Drying method are not limited, and either a dry heat method or a wet heat method may be employed. Drying temperatures are also not limited, and for example, drying may be carried out at room temperature to 200°C for 10 seconds to several days. Heat treatment at a temperature of 100-180°C for about 10 seconds to 5 minutes may be carried out after the drying, as necessary.

In a case in which the textile material is those to be dyed, treatment with the pretreatment liquid may be carried out either before dyeing or in the same bath as in dyeing. However, in a case in which reduction soaping is carried out, there is a risk that the compounds having the aforementioned specific functional groups (for example, phenolic polymer compounds) adsorbed may drop off in the course, and therefore, the treatment with the pretreatment liquid is preferably carried out following the reduction soaping after the dyeing.

The treatment temperature in the dip treatment can be 60-130°C. The treatment time can be 5-60 minutes.

The step of introducing the functional group by the pretreatment liquid is preferably treatment such that the amount of the adhering compound having the aforementioned specific functional group is 1.0-7.0 pbm, per 100 pbm of the fiber material. Within this range, both durable water-repellency and texture can be achieved at a high level.

The pH of the pretreatment liquid is preferably adjusted to 3-5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of the salt that can be used include sodium chloride, sodium carbonate, ammonium sulfate, and sodium sulfate.

In the step of introducing the functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and additionally, the textile product to be obtained has the favorable texture. The functional group-containing fibers to be obtained are preferably sufficiently dried before contacting them with the non-fluorine-based water-repellent agent.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of -100 to -0.1 mV and more preferably -50 to -1 mV. The zeta potential of the fiber surface can be measured, for example, using a zeta potential and particle size measurement system, ELSZ-1000ZS (manufactured by Otsuka Electronics Co., Ltd.).

### Examples

Examples of the present disclosure will be specifically illustrated; however, Examples do not restrict the present disclosure. Hereinbelow, "%" means wt.% unless otherwise specified.

The meanings of the abbreviations are as described in Table 1.

### [Polymerization Example 1]

A 500 ml plastic container was charged with 80 g of stearyl acrylate (CH₂=CHC(=O)OC₁₈H₃₇), 3 g of cationic emulsifier, 6 g of sorbitan fatty acid ester, 25 g of tripropylene glycol as a water-soluble glycol-based solvent, and 200 g of pure water, and the mixture was heated to 60°C, then stirred with a homomixer at 2,000 rpm for 1 minute, followed by emulsifying and dispersing by ultrasonic waves for 15 minutes. The emulsified dispersion was transferred to a 500-ml autoclave, followed by nitrogen purge for 15 minutes, and then 0.2 g of lauryl mercaptan and 20 g of vinyl chloride were added thereto. Furthermore, 1 g of an azo group-containing water-soluble initiator was added, the temperature of the mixture was raised to 60°C, and the mixture was subjected to a reaction for 4 hours to obtain an aqueous dispersion of the polymer. The monomer conversion ratio determined by gas chromatography was 99.0 to 99.8%. The dispersion was further diluted with pure water to prepare a water dispersion with a solid content of about 30 wt.%. Subsequently the dispersion was heated to 60°C and bubbled with a nitrogen gas at 500 cc/min for 24 hours while stirring to remove unreacted vinyl chloride monomers, thereby obtaining a water dispersion including the non-fluorine copolymer (A). Gas chromatogram analysis demonstrated that no residual vinyl chloride monomer was detected (detection limit: 1 ppm).

### [Polymerization Examples 2 to 8 and Comparative Polymerization Example 1]

A water dispersion containing non-fluorine copolymer (A) was obtained in the same manner as in Polymerization Example 1, except that the amounts of the monomer and the liquid medium used were changed as shown in Table 1.

### [Example 1]

To the water dispersion obtained in Polymerization Example 1 was added a vinyl chloride monomer so that the concentration thereof was 2 ppm, to obtain a water dispersion containing a non-fluorine copolymer (A) with a vinyl chloride concentration of 2 ppm. The vinyl chloride concentration was confirmed by gas chromatogram analysis. The obtained water dispersion was diluted with tap water to prepare 1,000 g of a test solution with a solid content of 1.0%. A polyester fabric was immersed in the test solution, and the resulting fabric was then squeezed with a mangle, and passed through a pin tenter at 160°C for 1 minute to be dried and cured.

By using the fabric treated in such a manner, a water-repellency test, Bundesmann test, fastness to rubbing test, and chalk mark test were carried out as described below. The results are shown in Table 2.

### [Examples 2-9, Comparative Examples 1-3]

Each water dispersion was obtained in the same manner as in Example 1, except that the water dispersions obtained in Polymerization Examples listed in Table 2 were used and the vinyl chloride concentrations were changed to those shown in Table 2. The following tests were carried out on the obtained water dispersions. The results are shown in Table 2.

### [Water-repellency test]

The treated test fabrics were stored in a constant temperature and humidity chamber at a temperature of 21°C and a humidity of 65% for 4 hours or longer, and then subjected to the following evaluations. Each of the test fabrics described above was evaluated for water-repellency by the spray method according to the JIS-L-1092 (AATCC-22). The water-repellency was evaluated according to the following criteria. The higher the score, the more favorable the water-repellency. The results are shown in Table 2.
100: No wet or water droplets adhered was found on the surface. 90: No wet but small water droplets adhered was found on the surface.
80: Wet in the form of separate small water droplets was found on the surface.
70: Wet was found on half of the surface and the separate small wet penetrated the fabric.
50: Wet was found on the whole surface.
0: Wet was found on the whole surface and the whole back surface.

### [Bundesmann test]

On each test fabric described above, rainfall was allowed to occur under the conditions of a rainfall rate of 80 cc/min, a temperature of the rainfall water of 20°C, and a rainfall duration of 1 minute according to the Bundesmann test described in the (C) method according to JIS-L-1092, and the amount of water leakage (mL) was measured. The amount of water leakage refers to the amount of water (ml) that passed through the front side of the fabric during the Bundesmann test. The results are shown in Table 2.

### [Fastness to rubbing test]

A test piece of each of the above test fabrics, with 220 mm in length × 30 mm in width, was made and attached with double-sided tape so that it did not loosen, and a friction block with a white cotton cloth attached was placed on the test piece and rubbed the test piece 100 times with a load of 2 N applied, according to the Rubbing Tester type II (Gakushin-Type) method described in the JIS-L-0849. After the test, the white cotton cloth covering the friction block was removed and it was examined on gray scale for assessing staining. The results are shown in Table 2.

### [Product stability test (amount of sedimentation)]

After having left the dispersion with a solid content adjusted to 30 wt.% at 50°C for 2 weeks, the condition of the dispersion is visually observed and then evaluated according to the following criteria. The results are shown in Table 2.
⊚: No change in appearance
○: No sedimentation, but very small amount of precipitates on dispersion surface
△: Slight sedimentation and very small amount of precipitates on dispersion surface
×: Separation or sedimentation

### [Chalk mark test]

Each of the test fabrics described above was placed on a flat place, the surface of the test fabric was slightly scratched with a fingernail, and the remaining chalk-like scratch mark by the fingernail was visually assessed and evaluated. The results are shown in Table 2.
⊚: No scratch mark
○: Thin scratch mark is found
△: Scratch mark is found
×: Thick scratch mark is found

**[Table 1]**

| | Poly. Ex.1 | Poly. Ex. 2 | Poly. Ex.3 | Poly. Ex.4 | Poly. Ex.5 | Poly. Ex.6 | Poly. Ex.7 | Poly. Ex.8 | Com. Poly. Ex.1 |
|---|---|---|---|---|---|---|---|---|---|
| Stearyl acrylate | 80 | 65 | 90 | 85 | 65 | 75 | 50 | 70 | 80 |
| Isobornyl methacrylate | | 5 | | | 5 | | | 5 | |
| Diacetone acrylamide | | | 5 | 5 | | 5 | | 5 | |
| Vinyl chloride | 20 | 30 | 5 | 10 | 30 | 20 | 50 | 20 | 20 |
| (Monomers in total) | (100) | (100) | (100) | (100) | (100) | (100) | (100) | (100) | (100) |
| Tripropylene glycol | 25 | | 5 | | 10 | 75 | 35 | | |
| Dipropylene glycol | | 25 | | | | | | | |
| Dipropylene glycol monomethyl ether | | | | 50 | | | | 25 | |
| Acetone | | | | | | | | | 25 |
| Pure water | 200 | 200 | 220 | 175 | 215 | 150 | 190 | 200 | 200 |
| Water-soluble organic solvent (per 100 pbw of polymer) | 25 | 25 | 5 | 50 | 10 | 75 | 35 | 25 | 25 |
| Water-soluble organic solvent (per 100 pbw of water) | 13 | 13 | 2 | 29 | 5 | 50 | 18 | 13 | 13 |

The numerals denote pbw unless otherwise specified.

**[Table 2]**

| | Ex. 1 | Ex. 2 | Ex. 3 | Ex. 4 | Ex. 5 | Ex. 6 | Ex. 7 | Ex. 8 | Ex. 9 | Com. Ex. 1 | Com. Ex. 2 | Com. Ex. 3 |
|---|---|---|---|---|---|---|---|---|---|---|---|---|
| Polymerization Example | Poly. Ex.1 | Poly. Ex.2 | Poly. Ex.3 | Poly. Ex.4 | Poly. Ex.5 | Poly. Ex.6 | Poly. Ex.7 | Poly. Ex.8 | Poly. Ex.8 | Com. Poly. Ex.1 | Poly. Ex.1 | Poly. Ex.2 |
| Amount of unreacted vinyl chloride | 2ppm | 5ppm | 2ppm | 2ppm | 1ppm | 2ppm | 2ppm | 2ppm | 5ppm | 2ppm | 20 ppm | 20 ppm |
| Water-repellency | 100 | 100 | 100 | 100 | 100 | 100 | 100 | 100 | 100 | 95 | 100 | 100 |
| Bundesmann (after 10 minutes) | 90 | 90+ | 90 | 95 | 90 | 90 | 95 | 90+ | 90 | 90+ | 90 | 90 |
| Fastness to rubbing | 4 | 4-5 | 4-5 | 4 | 4-5 | 4 | 4 | 4-5 | 4-5 | 3 | 3-4 | 3-4 |
| Product stability (amount of sedimentation) | ⊚ | ○-⊚ | ○-⊚ | ⊚ | ○-⊚ | ○-⊚ | ○-⊚ | ⊚ | ○-⊚ | Δ | △-× | △-× |
| Chalk mark | ○ | ⊚ | ⊚ | ⊚ | ○ | ○ | ○ | ⊚ | ○ | △ | Δ | △ |

### Industrial Applicability

The dispersion of the present disclosure can be utilized to impart water-repellency to various products.

## Claims

1. A dispersion comprising:
(A) a non-fluorine copolymer comprising:
(a1) ≥ 35 wt.% of repeating units derived from a hydrophobic monomer (a1), the monomer (a1) being a compound of the formula:
CH₂=C(-R¹²)-C(=O)-Y¹¹-(R¹¹)ₖ
wherein
R¹¹ is a C₂₋₄₀-hydrocarbon group,
R¹² is H, Cl, Br, I, -CH₃, cyano, or benzyl or phenyl each optionally substituted,
Y¹¹ is a di- to tetravalent group composed of at least one selected from a direct bond, a di- to tetravalent C₁-hydrocarbon group, -C₆H₄-, -O-, -C(=O)-, -S(=O)₂- and -NR'-, wherein R' is H or a C₁₋₄-hydrocarbon group, and
k is 1-3; and
(a2) ≥ 3 wt.% of repeating units derived from at least one chloride monomer (a2) selected from vinyl chloride and vinylidene chloride; and
(B) a liquid medium comprising a water-soluble organic solvent (b1) having at least two groups selected from OH and an ether group,
wherein the concentration of unreacted monomer (a2) in the dispersion is ≤ 10.0 ppm.

2. The dispersion of claim 1, wherein the hydrocarbon group in the monomer (a1) is linear C_{≥10}-alkyl.

3. The dispersion of claim 1 or 2, wherein the monomer (a1) has an amide group, a urea group or a urethane group.

4. The dispersion of any of claims 1-3, wherein the copolymer (A) further comprises a repeating unit derived from a crosslinkable monomer (a4).

5. The dispersion of any of claims 1-4, wherein the copolymer (A) contains ≥ 45 wt.% of repeating units derived from monomer (a1).

6. The dispersion of any of claims 1-5, which is a water dispersion.

7. The dispersion of any of claims 1-6, wherein the solvent (b1) is a glycol compound or a monoalkyl ether thereof.

8. The dispersion of any of claims 1-7, wherein the amount of solvent (b1) is 5-80 parts by weight (pbw) per 100 pbw of the copolymer (A).

9. The dispersion of any of claims 1-8, wherein the concentration of the unreacted monomer (a2) is ≤ 5.0 ppm.

10. A method for producing a dispersion comprising
(i) copolymerizing a hydrophobic monomer (a1) and at least one chloride monomer (a2) selected from vinyl chloride and vinylidene chloride in a polymerization solvent to obtain a polymer solution comprising a non-fluorine copolymer (A) comprising
(a1) ≥ 35 wt.% of repeating units derived from a hydrophobic monomer (a1), the monomer (a1) being a compound of the formula:
CH₂=C(-R¹²)-C(=O)-Y¹¹-(R¹¹)ₖ
wherein
R¹¹ is a C₂₋₄₀-hydrocarbon group,
R¹² is H, Cl, Br, I, -CH₃, cyano, or benzyl or phenyl each optionally substituted,
Y¹¹ is a di- to tetravalent group composed of at least one selected from a direct bond, a di- to tetravalent C₁-hydrocarbon group, -C₆H₄-, -O-, -C(=O)-, -S(=O)₂- and -NR'-, wherein R' is H or a C₁₋₄-hydrocarbon group, and
k is 1-3; and
(a2) ≥ 3 wt.% of repeating units derived from at least one chloride monomer (a2) selected from vinyl chloride and vinylidene chloride, and
(ii) reducing the concentration of unreacted monomer (a2) in the obtained polymer solution to ≤ 10.0 ppm,
wherein the polymerization solvent comprises a water-soluble organic solvent (b1) having at least two groups selected from OH and an ether group, or such a solvent (b1) is added to the polymer solution.

11. The use of the dispersion of any of claims 1-9 as a water-repellent agent.

12. A method for producing a treated product, comprising applying the dispersion a of any of claims 1-9 to a substrate.

13. A textile product treated with the dispersion of any of claims 1-9.

## Patentansprüche

1. Dispersion, umfassend:
(A) ein fluorfreies Copolymer, umfassend:
(a1) ≥ 35 Gew.-% Wiederholungseinheiten, die von einem hydrophoben Monomer (a1) abgeleitet sind, wobei das Monomer (a1) eine Verbindung der folgenden Formel ist:
CH₂=C(-R¹²)-C(=O)-Y¹¹-(R¹¹)ₖ
worin
R¹¹ eine C₂₋₄₀-Kohlenwasserstoffgruppe ist,
R¹² H, Cl, Br, I, -CH₃, Cyano oder jeweils gegebenenfalls substituiertes Benzyl oder Phenyl ist,
Y¹¹ eine zwei- bis vierwertige Gruppe ist, die aus mindestens einem Element aufgebaut ist, ausgewählt aus einer direkten Bindung, einer zweibis vierwertigen C₁-Kohlenwasserstoffgruppe, -C₆H₄-, -O-, -C(=O)-, -S(=O)₂- und -NR'-, wobei R' H oder eine C₁₋₄-Kohlenwasserstoffgruppe ist, und
k 1-3 ist; und
(a2) ≥ 3 Gew.-% Wiederholungseinheiten, die von mindestens einem Chloridmonomer (a2) abgeleitet sind, ausgewählt aus Vinylchlorid und Vinylidenchlorid; und
(B) ein flüssiges Medium, das ein wasserlösliches organisches Lösungsmittel (b1) mit mindestens zwei Gruppen, ausgewählt aus OH und einer Ethergruppe, umfasst,
wobei die Konzentration an nicht umgesetztem Monomer (a2) in der Dispersion ≤ 10,0 ppm beträgt.

2. Dispersion nach Anspruch 1, wobei die Kohlenwasserstoffgruppe im Monomer (a1) eine lineare C_{≥10}-Alkylgruppe ist.

3. Dispersion nach Anspruch 1 oder 2, wobei das Monomer (a1) eine Amidgruppe, eine Harnstoffgruppe oder eine Urethangruppe aufweist.

4. Dispersion nach mindestens einem der Ansprüche 1 bis 3, wobei das Copolymer (A) ferner eine von einem vernetzbaren Monomer (a4) abgeleitete Wiederholungseinheit umfasst.

5. Dispersion nach mindestens einem der Ansprüche 1 bis 4, wobei das Copolymer (A) ≥ 45 Gew.-% Wiederholungseinheiten enthält, die von Monomer (a1) abgeleitet sind.

6. Dispersion nach mindestens einem der Ansprüche 1 bis 5, die eine Wasserdispersion ist.

7. Dispersion nach mindestens einem der Ansprüche 1 bis 6, wobei das Lösungsmittel (b1) eine Glykolverbindung oder ein Monoalkylether davon ist.

8. Dispersion nach mindestens einem der Ansprüche 1 bis 7, wobei die Menge an Lösungsmittel (b1) 5 bis 80 Gewichtsteile (pbw) pro 100 pbw des Copolymers (A) beträgt.

9. Dispersion nach mindestens einem der Ansprüche 1 bis 8, wobei die Konzentration des nicht umgesetzten Monomers (a2) ≤ 5,0 ppm beträgt.

10. Verfahren zur Herstellung einer Dispersion, umfassend
(i) Copolymerisieren eines hydrophoben Monomers (a1) und mindestens eines Chloridmonomers (a2), ausgewählt aus Vinylchlorid und Vinylidenchlorid, in einem Polymerisationslösungsmittel, um so eine Polymerlösung zu erhalten, die ein fluorfreies Copolymer (A) umfasst, das folgendes umfasst:
(a1) ≥ 35 Gew.-% Wiederholungseinheiten, die von einem hydrophoben Monomer (a1) abgeleitet sind, wobei das Monomer (a1) eine Verbindung der folgenden Formel ist:
CH₂=C(-R¹²)-C(=O)-Y¹¹-(R¹¹)ₖ
worin
R¹¹ eine C₂₋₄₀-Kohlenwasserstoffgruppe ist,
R¹² H, Cl, Br, I, -CH₃, Cyano oder jeweils gegebenenfalls substituiertes Benzyl oder Phenyl ist,
Y¹¹ eine zwei- bis vierwertige Gruppe ist, die aus mindestens einem Element aufgebaut ist, ausgewählt aus einer direkten Bindung, einer zweibis vierwertigen C₁-Kohlenwasserstoffgruppe, -C₆H₄-, -O-, -C(=O)-, -S(=O)₂- und -NR'-, wobei R' H oder eine C₁₋₄-Kohlenwasserstoffgruppe ist, und
k 1-3 ist; und
(a2) ≥ 3 Gew.-% Wiederholungseinheiten, die von mindestens einem Chloridmonomer (a2) abgeleitet sind, ausgewählt aus Vinylchlorid und Vinylidenchlorid; und
(ii) Verringern der Konzentration an nicht umgesetztem Monomer (a2) in der erhaltenen Polymerlösung auf ≤ 10,0 ppm,
wobei das Polymerisationslösungsmittel ein wasserlösliches organisches Lösungsmittel (b1) mit mindestens zwei Gruppen, ausgewählt aus OH und einer Ethergruppe, umfasst, oder ein solches Lösungsmittel (b1) der Polymerlösung zugesetzt wird.

11. Verwendung der Dispersion nach mindestens einem der Ansprüche 1 bis 9 als wasserabweisendes Mittel.

12. Verfahren zur Herstellung eines behandelten Produkts, umfassend das Aufbringen der Dispersion a nach mindestens einem der Ansprüche 1 bis 9 auf ein Substrat.

13. Textilprodukt, das mit der Dispersion gemäß mindestens einem der Ansprüche 1 bis 9 behandelt wurde.

## Revendications

1. Dispersion comprenant :
(A) un copolymère non fluoré comprenant :
(a1) ≥ 35 % en poids de motifs répétés dérivés d'un monomère hydrophobe (a1), le monomère (a1) étant un composé de la formule :
CH₂=C(-R¹²)-C(=O)-Y¹¹-(R¹¹)ₖ
dans laquelle
R¹¹ est un groupe hydrocarboné en C₂₋₁₀,
R¹² est H, Cl, Br, I, -CH₃, cyano ou benzyle ou phényle chacun facultativement substitué,
Y¹¹ est un groupe di- à tétravalent composé d'au moins un élément sélectionné parmi une liaison directe, un groupe hydrocarboné en C₁ di- à tétravalent, -C₆H₄-, -O-, -C(=O)-, -S(=O)₂- et -NR'-, dans lequel R' est H ou un groupe hydrocarboné en C₁₋₄, et
k est 1-3 ; et
(a2) ≥ 3 % en poids de motifs répétés dérivés d'au moins un monomère chloré (a2) sélectionné parmi le chlorure de vinyle et le chlorure de vinylidène ; et
(B) un milieu liquide comprenant un solvant organique hydrosoluble (b1) présentant au moins deux groupes sélectionnés parmi OH et un groupe éther,
dans laquelle la concentration du monomère (a2) non réagi dans la dispersion est ≤ 10,0 ppm.

2. Dispersion selon la revendication 1, dans laquelle le groupe hydrocarboné dans le monomère (a1) est un alkyle linéaire en C_{≥10}.

3. Dispersion selon la revendication 1 ou la revendication 2, dans laquelle le monomère (a1) présente un groupe amide, un groupe urée ou un groupe uréthane.

4. Dispersion selon l'une quelconque des revendications 1 à 3, dans laquelle le copolymère (A) comprend en outre un motif répété dérivé d'un monomère réticulable (a4).

5. Dispersion selon l'une quelconque des revendications 1 à 4, dans laquelle le copolymère (A) contient ≥ 45 % en poids de motifs répétés dérivés du monomère (a1).

6. Dispersion selon l'une quelconque des revendications 1 à 5, qui est une dispersion aqueuse.

7. Dispersion selon l'une quelconque des revendications 1 à 6, dans laquelle le solvant (b1) est un composé glycol ou un éther monoalkyle de celui-ci.

8. Dispersion selon l'une quelconque des revendications 1 à 7, dans laquelle la quantité de solvant (b1) est de 5 à 80 parties en poids (pbw) par 100 pbw du copolymère (A).

9. Dispersion selon l'une quelconque des revendications 1 à 8, dans laquelle la concentration du monomère (a2) non réagi est ≤ 5,0 ppm.

10. Procédé de production d'une dispersion comprenant
(i) le fait de copolymériser un monomère hydrophobe (a1) et au moins un monomère chloré (a2) sélectionné parmi le chlorure de vinyle et le chlorure de vinylidène dans un solvant de polymérisation pour obtenir une solution polymère comprenant un copolymère (A) non fluoré comprenant
(a1) ≥ 35 % en poids de motifs répétés dérivés d'un monomère hydrophobe (a1), le monomère (a1) étant un composé de la formule :
CH₂=C(-R¹²)-C(=O)-Y¹¹-(R¹¹)ₖ
dans laquelle
R¹¹ est un groupe hydrocarboné en C₂₋₄₀,
R¹² est H, Cl, Br, I, -CH₃, cyano ou benzyle ou phényle chacun facultativement substitué,
Y¹¹ est un groupe di- à tétravalent composé d'au moins un élément sélectionné parmi une liaison directe, un groupe hydrocarboné en C₁ di- à tétravalent, -C₆H₄-, -O-, -C(=O)-, -S(=O)₂- et -NR'-, dans lequel R' est H ou un groupe hydrocarboné en C₁₋₄, et
k est 1-3 ; et
(a2) ≥ 3 % en poids de motifs répétés dérivés d'au moins un monomère chloré (a2) sélectionné parmi le chlorure de vinyle et le chlorure de vinylidène, et
(ii) le fait de réduire la concentration du monomère (a2) non réagi dans la solution polymère obtenue à ≤ 10,0 ppm,
dans lequel le solvant de polymérisation comprend un solvant organique hydrosoluble (b1) présentant au moins deux groupes sélectionnés parmi OH et un groupe éther, ou un tel solvant (b1) est ajouté à la solution polymère.

11. Utilisation de la dispersion selon l'une quelconque des revendications 1 à 9 en tant qu'agent hydrofuge.

12. Procédé de production d'un produit traité, comprenant le fait d'appliquer la dispersion selon l'une quelconque des revendications 1 à 9 sur un substrat.

13. Produit textile traité avec la dispersion selon l'une quelconque des revendications 1 à 9.
